# EUROPEAN PATENT APPLICATION

(11) **EP 2 774 955 A1**
(43) Date of publication of application: **10.09.2014**
(21) Application number: 12845278.6
(22) Date of filing: 31.10.2012
(51) Int. Cl.: C08L 101/12, B32B 7/02, B32B 27/18, H01B 1/24, H02J 17/00

(54) **COMPOSITE MATERIAL, TRANSMISSION SHEET, TRANSMISSION UNIT, AND NON-CONTACT ELECTRIC-POWER TRANSMISSION SYSTEM PROVIDED THEREWITH**

(30) Priority: 31.10.2011 JP 2011238968; 14.03.2012 JP 2012057956
(71) Applicant: Showa Denko K.K., Tokyo 105-8518 (JP)
(72) Inventor: KOYAMA Tamami, Tokyo 105-8518 (JP); TOKITA Koji, Tokyo 105-8518 (JP); MITSUMOTO Ryuichi, Tokyo 105-8518 (JP); TAMINO Yasuaki, Tokyo 105-8518 (JP); NISHIOKA Ayako, Tokyo 105-8518 (JP)
(74) Representative: Strehl Schübel-Hopf & Partner
(86) International application number: PCT/JP2012/078201
(87) International publication number: WO 2013/065752

(57) **Abstract**

Provided is a composite material which is obtained by dispersing conductive filler in a polymer material, wherein an amount of the conductive filler added is 1 part by mass to 25 parts by mass with respect to 100 parts by mass of the polymer material, and wherein a relative dielectric constant of the composite material is 30 or higher and a dielectric loss tangent of the composite material is 3 or lower at an AC voltage with a frequency of 100 Hz.

## Description

### TECHNICAL FIELD

The present invention relates to a composite material, a transmission sheet, a transmission unit, and a non-contact power transmission system including the same.

Priority is claimed on Japanese Patent Application No. 2011-238968, filed October 31, 2011 and Japanese Patent Application No. 2012-057956, filed March 14, 2012, the contents of which are incorporated herein by reference.

### BACKGROUND ART

In the related art, various types of high relative dielectric constant materials have been developed. High dielectric constant (relative permittivity) materials are used for various purposes, but are presumed to be primarily used in capacitors. When high dielectric constant materials are used in capacitors, superior materials must have high capacitance and low dielectric loss. Further, if a property such as high withstand voltage is imparted to high relative dielectric constant materials, a large amount of charge can be stored, and the use thereof will be increased. Currently, in order to satisfy these conditions, a large number of materials have been developed.

A large number of hard inorganic materials to which the above-described properties are imparted have been developed. For example, ceramic materials having relative dielectric constants of 4 to 10000 have been developed and are selectively used depending on the intended use.

In ceramic materials which are most commonly used as high relative dielectric constant materials, dielectric constant and dielectric loss tangent have a trade-off relationship which is specified by elements constituting crystals of ceramic materials and crystal structures thereof. Therefore, it is almost impossible to obtain both a desired dielectric constant and a desired dielectric loss tangent. That is, in a high dielectric constant ceramic material, since a crystalline structure thereof is asymmetrical, the dielectric loss tangent is inevitably increased.

Incidentally, organic dielectric materials have been developed (for example, see Non-Patent Document 1) in recent years. Regarding organic materials, there has been an attempt to achieve a high dielectric constant and a low dielectric loss tangent, but there has been the same phenomenon as that of ceramic materials with organic materials. That is, there is a dilemma in that, for example, when the dielectric constant of a material is improved by imparting a chemical structure to promote charge polarization and electron spin orientation, the dielectric loss tangent is inevitably increased.

As described above, the trade-off relationship between relative dielectric constant and dielectric loss has yet to be solved and has been considered inevitable. This problem has been considered to be impossible to solve.

In dielectric materials in which a polymer material is a matrix, conductive filler is added to improve a relative dielectric constant.

For example, Published Japanese Translation No. 2005-500648 of the PCT International Publication discloses a dielectric material obtained by dispersing carbon nanotubes in a polymer matrix. PCT International Publication No. WO 2006/064782 discloses a dielectric material obtained by dispersing carbon particles in a silicone rubber. In addition, Japanese Unexamined Patent Application, First Publication No. 2006-107770 discloses a dielectric paste obtained by dispersing conductive powder on which an insulating coating film is formed in a binder resin. PCT International Publication No. WO 2009/041507 discloses a technique of adding carbon black to a dielectric elastomer composition obtained by dispersing an inorganic dielectric in a polymer matrix.

Incidentally, electric field coupling type (capacitive coupling type) non-contact power transmission techniques (for example, see Patent Documents 5 to 7) are disclosed in which a transmission electrode and a reception electrode are arranged to be close to or in close contact with each other to form a capacitor, and power is transmitted from a transmission side to a reception side through the capacitor (coupling capacitor).

In order to increase a capacitance and improve a power transmission efficiency in a non-contact power transmission system, a technique of using a dielectric layer between electrodes of a coupling capacitor is disclosed (for example, see Patent Document 8).

### PRIOR ART DOCUMENTS

### Patent Documents

[Patent Document 1] Published Japanese Translation No. 2005-500648 of the PCT International Publication
[Patent Document 2] PCT International Publication No. WO 2006/064782
[Patent Document 3] Japanese Unexamined Patent Application, First Publication No. 2006-107770
[Patent Document 4] PCT International Publication No. WO 2009/041507
[Patent Document 5] Japanese Unexamined Patent Application, First Publication No. 2009-89520
[Patent Document 6] Published Japanese Translation No. 2009-531009 of the PCT International Publication
[Patent Document 7] Japanese Unexamined Patent Application, First Publication No. 2011-259649
[Patent Document 8] Japanese Unexamined Patent Application, First Publication No. 2012-5171

### Non-Patent Documents

[Non-Patent Document 1] Proceedings of International Society for Optics and Photonics, Vol. 5385, pp. 87 to 98

### SUMMARY OF THE INVENTION

### Problems to be solved by the Invention

Even in a method of obtaining a composite material having a high relative dielectric constant by adding conductive filler to a polymer matrix, as the amount of the conductive filler added is increased, the relative dielectric constant of the dielectric material is improved; however, when the amount of the conductive filler added is greater than a predetermined amount, conductive filler particles come into contact with each other to form a conductive path, and thus the dielectric loss tangent is increased. As a result, it is necessary that the amount of the conductive filler be suppressed to a low concentration, and a high dielectric constant cannot be expected.

In a method of coating an insulating film on conductive filler to prevent the formation of a conductive path and suppress an increase in dielectric loss tangent, the working process is complicated, reproducibility and mass productivity are insufficient, and there is a problem with mechanical strength such as the peeling of the coated insulating film.

The present invention has been made to solve the above-described problems of the related art, and an object thereof is to provide a composite material obtained by adding conductive filler to a polymer matrix, the composite material being capable of alleviating the trade-off relationship between relative dielectric constant and dielectric loss tangent and obtaining high relative dielectric constant and low dielectric loss tangent even when a coating film is not formed on the conductive filler.

In addition, an electric field coupling type non-contact power transmission system has been already put into practice, and the development of a material for an optimum coupling capacitor and a structure of an optimum coupling capacitor for power transmission has been desired.

In particular, the capacitance of a coupling capacitor (hereinafter, abbreviated as "electrostatic capacitance") depends on the contact area between a transmission electrode and a reception electrode. However, when the shapes of contact surfaces of both electrodes do not match with each other, the contact surfaces are only partially in contact (close contact) with each other, and thus the contact area is decreased. Therefore, there is a problem in that sufficient capacitance is not obtained.

Further, in electric field coupling type non-contact power transmission systems, it is considered that, in many cases, electrodes are used in a state of being embedded inside a casing. Therefore, a dielectric sheet with a high relative dielectric constant formed on an electrode is developed, but a casing, that is, an insulating layer with a low dielectric constant is coated on the surface of the dielectric sheet. As a result, the high relative dielectric constant cannot be utilized. That is, even when a high dielectric layer is inserted between electrodes to increase an electrostatic capacitance, since an insulating layer with low dielectric constant, that is, a casing is inserted thereinto, the electrostatic capacitance is significantly decreased. Therefore, the performance of a high output transmission sheet is inhibited from being exhibited. For example, the relative dielectric constant of barium titanate is 4000. However, when a 200 µm-thick PTFE film (relative dielectric constant: 2.2) is coated on a barium titanate layer, the electrostatic capacitance of a dielectric layer including the PTFE film and the barium titanate layer is decreased to 1/180.

In addition, many systems use a transmission electrode having a configuration in which a casing (insulating layer with a low dielectric constant) is directly coated on an exposed metal electrode without using a high relative dielectric constant layer. In this configuration, due to the intrinsic rigidity of a metal, the contact between the metal electrode and the casing is not sufficient, and the contact between the transmission electrode and the reception electrode is also not sufficient. Therefore, it is difficult to realize high output.

The present invention has been made in consideration of the above-described circumstances, and an object thereof is to provide a transmission unit used for a non-contact power transmission system, a transmission sheet constituting the transmission unit, and a non-contact power transmission system including the same, in which the transmission unit and the transmission sheet constitutes a coupling capacitor capable of realizing high capacitance and high transmission efficiency. In particular, regarding the transmission sheet, an object of the present invention is to provide a transmission sheet capable of realizing high output even in the presence of a casing (low dielectric insulating layer).

### Means for Solving the Problems

In order to achieve the above-described objects, the present invention provides the following means.
(1) A composite material which is obtained by dispersing conductive filler in a polymer material, in which an amount of the conductive filler added is 1 part by mass to 25 parts by mass with respect to 100 parts by mass of the polymer material, and a relative dielectric constant is 30 or higher and a dielectric loss tangent is 3 or lower at an AC voltage with a frequency of 100 Hz.
(2) A composite material comprising a polymer material and conductive filler, in which the conductive filler forms aggregates having an average diameter of 1 µm or greater, and an average distance between the aggregates is 10 nm to 30 µm.
(3) A composite material comprising at least two conductive layers each of which includes a polymer material and conductive filler and has a thickness of 1 µm or greater, and an insulating layer that includes a polymer material which is the same as or different from that of the conductive layers, is inserted between the conductive layers, and has a thickness of 10 nm to 30 µm.
(4) The composite material according to any one of (1) to (3), in which the conductive filler is composed of a carbon material.
(5) The composite material according to any one of (1) to (4), in which the polymer material is cross-linked.
(6) The composite material according to any one of (1) to (5), comprising two or more types of polymer materials which are mutually insoluble as the polymer material.
(7) The composite material according to any one of (1) to (6), comprising inorganic dielectric filler.
(8) The composite material according to any one of (1) to (7), in which the polymer material is one or more selected from the group consisting of polyimide, silicone resin, a fluoropolymer, polyurethane, acrylic resin, polycarbonate, polypropylene, polyethylene, polyester, epoxy resin, cyanate ester resin, natural rubber, and synthetic rubber.
(9) The composite material according to any one of (1) to (7), in which the polymer material is natural rubber.
(10) The composite material according to any one of (1) to (7), in which the polymer material is synthetic rubber.
(11) A transmission sheet constituting a transmission unit used for a non-contact power transmission system which can transmit power by arranging a transmission electrode and a reception electrode to be close to each other, wherein the transmission sheet consists of the composite material according to any one of (1) to (10).
(12) A transmission sheet constituting a transmission unit used for a non-contact power transmission system which can transmit power by arranging a transmission electrode and a reception electrode to be close to each other, wherein the transmission sheet comprises a functional composite material layer and a first insulating layer in this order, wherein the functional composite material layer consists of the composite material according to any one of (1) to (10).
(13) The transmission sheet used for a non-contact power transmission system according to (12), in which a volume resistivity of the first insulating layer is 1×10¹⁰ (Ω·cm) or higher.
(14) The transmission sheet used for a non-contact power transmission system according to (12) or (13), in which the first insulating layer is composed of any one of natural rubber, EPDM, ABS resin, and PTFE.
(15) A transmission unit used for a non-contact power transmission system which can transmit power by arranging a transmission electrode and a reception electrode to be close to each other, wherein the transmission unit comprising an electrode and a functional composite material layer; and wherein the functional composite material layer consists of the composite material according to any one of (1) to (10).
(16) The transmission unit used for a non-contact power transmission system according to (15), in which a first insulating layer is formed on the functional composite material layer.
(17) The transmission unit used for a non-contact power transmission system according to (16), in which a volume resistivity of the first insulating layer is 1×10¹⁰ (Ω·cm) or higher.
(18) The transmission unit used for a non-contact power transmission system according to (16) or (17), in which the first insulating layer is composed of any one of natural rubber, EPDM, ABS resin, and PTFE.
(19) The transmission unit used for a non-contact power transmission system according to any one of (15) to (18), in which a second insulating layer is formed between the electrode and the functional composite material layer.
(20) The transmission unit used for a non-contact power transmission system according to (19), in which a volume resistivity of the second insulating layer is 1×10¹⁰ (Ω·cm) or higher.
(21) The transmission unit used for a non-contact power transmission system according to (19) or (20), in which the second insulating layer is composed of any one of natural rubber, EPDM, ABS resin, PTFE, and a cyano acrylate-based adhesive such as ethyl cyanoacrylate.
(22) The transmission unit used for a non-contact power transmission system according to any one of (15) to (21), in which the electrode is composed of a conductor including an elastomer and a carbon fiber.
(23) A transmission unit used for a non-contact power transmission system which can transmit power by arranging a transmission electrode and a reception electrode to be close to each other, wherein the transmission unit comprises an electrode, a functional composite material layer, and a first insulating layer in this order; and wherein the functional composite material layer consists of the composite material according to any one of (1) to (10).
(24) The transmission unit used for a non-contact power transmission system according to (23), in which a volume resistivity of the first insulating layer is 1×10¹⁰ (Ω·cm) or higher.
(25) The transmission unit used for a non-contact power transmission system according to (23) or (24), in which the first insulating layer is composed of any one of natural rubber, EPDM, ABS resin, and PTFE.
(26) The transmission unit used for a non-contact power transmission system according to any one of (23) to (25), in which a second insulating layer is formed between the electrode and the functional composite material layer.
(27) The transmission unit used for a non-contact power transmission system according to (26), in which a volume resistivity of the second insulating layer is 1×10¹⁰ (Ω·cm) or higher.
(28) The transmission unit used for a non-contact power transmission system according to (26) or (27), in which the second insulating layer is formed of any one of natural rubber, EPDM, ABS resin, PTFE, and a cyano acrylate-based adhesive such as ethyl cyanoacrylate.
(29) The transmission unit used for a non-contact power transmission system according to any one of (23) to (28), in which the electrode is formed of a conductor including an elastomer and a carbon fiber.
(30) A non-contact power transmission system comprising the transmission sheet used for a non-contact power transmission system according to any one of (11) to (14).
(31) A non-contact power transmission system comprising the transmission unit used for a non-contact power transmission system according to any one of (15) to (29).

It should be noted that "arranging a transmission electrode and a reception electrode to be close to each other" includes arranging a transmission electrode and a reception electrode to be close to each other with a transmission sheet interposed therebetween. In addition, within a range not impairing the effects of the present invention, other layers may be further formed between the transmission electrode and the reception electrode.

### Advantageous Effects of Invention

According to the present invention, it is possible to provide a composite material having a high relative dielectric constant and a low dielectric loss tangent which is obtained by adding conductive filler to a polymer matrix.

According to the present invention, it is possible to provide a transmission unit used for a non-contact power transmission system, a transmission sheet constituting the transmission unit, and a non-contact power transmission system including the same, in which the transmission unit and the transmission sheet constitute a coupling capacitor capable of realizing high capacitance and high transmission efficiency. In particular, regarding the transmission sheet, it is possible to provide a transmission sheet capable of realizing high output even in the presence of a casing (low dielectric insulating layer).

### BRIEF DESCRIPTION OF THE DRAWINGS

FIG. 1 is a diagram schematically illustrating a transmission unit according to a first embodiment of the present invention.
FIG. 2 is a diagram schematically illustrating a transmission unit according to a second embodiment of the present invention.
FIG. 3 is a cross-sectional view schematically illustrating a coupling capacitor including a SUS electrode, a functional composite material layer, a first insulating layer, and a copper electrode in this order.
FIG. 4 is a diagram illustrating combinations of a transmission-side configuration and a reception-side configuration.
FIG. 5 is a graph illustrating a relationship between the additional amount of conductive filler added with respect to a polymer material; and the conductivity of a composite material.
FIG. 6 is cross-sectional images of a composite material according to the present invention.
FIG. 7 is cross-sectional images of composite materials of comparative examples.
FIG. 8 is a diagram illustrating a relationship between voltages which are applied to the composite material according to the present invention and the composite materials of the comparative examples; and leakage currents thereof.
FIG. 9 is a diagram illustrating a circuit configuration of a wireless power supply system (non-contact power transmission system) which is prepared in Examples according to the present invention and Comparative Examples.
FIG. 10 is a graph illustrating a relationship between an AC frequency and an output in a configuration of Example 7.
FIG. 11 is graphs illustrating results of inspecting outputs of AO (first pattern) (a), BO (first pattern) (b), AO (second pattern) (c), and BO (second pattern) (d) which are combinations of a transmission-side configuration and a reception-side configuration.

FIG. 12 is a diagram illustrating the results of evaluating, based on an LED turned-on state, a transmission system in which a combination of transmission units including functional composite material layers used in Examples 11-1 to 11-6 is CO (first pattern).

### MODE FOR CARRYNG OUT THE INVENTION

Hereinafter, configurations of a composite material, a transmission sheet, a transmission unit, and a non-contact power transmission system including the same (an electric field coupling type non-contact power transmission system will be described as an example, but the present invention is not limited thereto) to which the present invention is applied will be described using the appended drawings. In some cases, in the drawings used in the following description, characteristic portions are illustrated on an enlarged scale for convenience of easy understanding of characteristics, and the dimension ratios and the like of the respective components are not necessarily the same as the actual ones. In addition, in the following description, materials, dimensions, and the like are merely exemplary, do not limit the present invention, and can be appropriately modified within a range not departing from the scope of the present invention.

### «Composite Material»

As a composite material according to the present invention, a composite material A, a composite material B, and a composite material C described below are used.

Composite material A: A composite material including: a polymer material as a matrix; and conductive filler, in which the conductive filler forms aggregates having a constant average diameter, and the average distance between the aggregates is maintained to be constant.

Composite material B: A composite material including: at least two conductive layers each of which includes a polymer material as a matrix and conductive filler and has a predetermined thickness; and an insulating layer that includes a polymer material, which is the same as or different from that of the conductive layers, as a matrix and has a predetermined thickness.

Composite material C: A composite material which is obtained by dispersing conductive filler in a polymer material as a matrix, in which an amount of the conductive filler added is 1 part by mass to 25 parts by mass with respect to 100 parts by mass of the polymer material, and a relative dielectric constant is 30 or higher and a dielectric loss tangent is 3 or lower at an AC voltage with a frequency of 100 Hz.

The composite materials A to C according to the present invention include a polymer material and conductive filler. In a commonly-used material, according to the mechanism based on the percolation theory when the filling amount (concentration, the additive amount) of the conductive filler is increased, the conductivity is increased, and when the filling amount is greater than a percolation threshold, the conductivity is rapidly increased.

In the composite material according to the present invention, when the filling amount of the conductive filler is increased, typically, both the conductivity and the relative dielectric constant are increased.

A commonly-used dielectric is composed of only a material in which electrons cannot be moved, and a commonly-used conductor is composed of only a material in which electrons can be moved. The composite material according to the present invention is composed of a conductive portion (conductive filler) and a dielectric portion (polymer material), that is, is composed of a portion in which electrons can be moved and a portion in which electrons cannot be moved. Therefore, characteristics of the composite material can be controlled.

In addition, in the composite material according to the present invention, when the amount of the conductive filler filled is increased, the dielectric loss tangent is increased, but the increase amount is extremely small compared to a composite material including a polymer material of the related art as a base material. When these composite materials are used for a transmission unit used for a non-contact power transmission system, the dielectric loss tangent is a physical value relating to loss during power transmission. When the dielectric loss tangent is high, the loss is increased, and when the dielectric loss tangent is low, the loss is decreased. In a composite material including a polymer material of the related art as a base material, when the amount of the conductive filler filled is increased to obtain a high relative dielectric constant, the dielectric loss tangent is increased. Therefore, the amount of the conductive filler filled is not sufficiently increased, and thus a desired high relative dielectric constant cannot be obtained.

On the other hand, in the composite material according to the present invention, even when the amount of the conductive filler filled is increased, the increase amount in dielectric loss tangent can be decreased. Therefore, the amount of the conductive filler filled can be increased compared to the composite material including a polymer material of the related art as a base material. As a result, the relative dielectric constant can be increased compared to the related art.

In this way, in the composite material according to the present invention, unlike the composite material including a polymer material of the related art as a base material, the trade-off relationship between relative dielectric constant and dielectric loss tangent is alleviated.

### [Polymer Material]

The polymer material is not particularly limited, but polyimide, silicone resin, a fluoropolymer, polyurethane, acrylic resin, polycarbonate, polyethylene, polypropylene, polyester, epoxy resin, polyamide, a styrene-acrylonitrile copolymer, polystyrene, a polylactic acid (PLA), various engineering plastics, natural rubber (NR), synthetic rubber (SR) and the like are preferable, and natural rubber and synthetic rubber (SR) are more preferable. Examples of the synthetic rubber (SR) include isoprene rubber, butadiene rubber, styrene-butadiene rubber, ethylene-propylene rubber (EPDM), chloroprene rubber, acrylic rubber, chlorosulfonated polyethylene rubber, urethane rubber, silicone rubber, butyl rubber (IIR), nitrile-butadiene rubber (NBR), fluorine-containing rubber, ethylene vinyl acetate rubber, and epichlorohydrin rubber (ECO). Among these, ethylene-propylene rubber, butyl rubber, and nitrile rubber are preferable. These polymer materials may be used alone or in a combination of two or more types thereof. When a rubber having a carbon-carbon double bond such as natural rubber, butyl rubber, and nitrile rubber or a curing resin such as epoxy resin is used as the polymer material, it is preferable that the polymer material be cross-linked from the viewpoints of mechanical properties of the obtained composite material and the like. A cross-linking method is not particularly limited, and a well-known method can be used.

### [Conductive Filler]

Examples of the conductive filler include metal particles (including powders) of gold, silver, copper, aluminum, and the like, fibrous materials, carbon materials, and conductive ceramics. Among these, carbon materials and metal materials are preferable. Examples of the carbon materials include conductive carbon blacks such as graphite, acetylene black, and ketjen black; fulleren; and carbon fibers such as carbon nanotube, carbon nanofiber, carbon nanohorn, grapheme, and vapor-grown carbon fiber. Among these, carbon fibers are preferable. As the metal materials, all the conductive metals can be used.

### [Other Components]

Within a range not impairing the effects of the present invention, the composite material according to the present invention may further include various additives (for example, a pigment, a stabilizer, or a plasticizer), a cross-linking agent, a cross-linking auxiliary agent, a cross-linking promoter, and inorganic filler in addition to the polymer material and the conductive filler described above. When the inorganic filler is added, it is preferable that the amount of the inorganic filler be 0 parts by mass to 200 parts by mass with respect to the 100 parts by mass of the polymer material from the viewpoints of mechanical properties and the weight of the obtained composite material. In addition, in order to improve workability, mechanical properties, weather resistance, and the like, well-known additives may be appropriately included therein.

### [Composite Material A]

### <Aggregates of Conductive Filler>

In the composite material A according to the present invention, the average diameter of the aggregates of the conductive filler is 1 µm or greater. In addition, the average distance between the aggregates is 10 nm to 30 µm. The preferable average diameter and the preferable average distance between the aggregates vary depending on the types of the polymer material and the conductive filler to be used. For example, when butyl rubber, nitrile rubber or natural rubber are used as the polymer material and when a carbon fiber is used as the conductive filler, the average diameter of the aggregates is preferably 1 µm to 10 µm and more preferably 2 µm to 6 µm, and the average distance between the aggregates is preferably 100 nm to 20 µm and more preferably 2 µm to 10 µm. When the average diameter and the average distance between the aggregates are in the above-described ranges, a composite material is obtained in which the relative dielectric constant is increased and the dielectric loss tangent is decreased.

The average diameter and the average distance between the aggregates in the composite material are determined by using the following procedure.

Using a microtome, a slice having a thickness of about 5 µm is cut out from the composite material. When the composite material is film-shaped, the slice is cut out such that the thickness direction of the slice is substantially perpendicular to the thickness direction of the composite material. In addition, when the composite material is too large to be directly cut by a microtome, the slice may be cut out therefrom by the microtome after the composite material is cut into an appropriate size using a razor blade or the like. When the composite material is too soft to be cut as it is, the slice may be cut out therefrom by a microtome after the composite material is frozen using liquid nitrogen.

Next, the prepared slice is observed using a transmission microscope at a magnification of 500 times. Regarding aggregates in the visual field, short diameters and distances between two adjacent aggregates are measured, and arithmetic average values thereof are obtained, respectively. As a result, the average diameter and the average distance between the aggregates are obtained.

A preferable additive amount of the conductive filler used to obtain the above-described aggregates varies depending on the type of the polymer material as a matrix and the shape of the conductive filler to be used. For example, when butyl rubber, nitrile rubber, or natural rubber is used as the polymer material and when the a carbon fiber having an average fiber diameter of 1 nm to 100 nm and an average fiber length of 0.5 µm or 50 µm is added as the conductive filler, the amount of the carbon fiber added is preferably 1 part by mass to 25 parts by mass and more preferably 1 part by mass to 10 parts by mass with respect to 100 parts by mass of the polymer material. The average particle size, the average fiber diameter, and the average fiber length of the conductive filler are obtained by observing the conductive filler using an electron microscope and obtaining arithmetic average values of fiber diameters and fiber lengths of about 100 conductive filler particles, respectively.

### <Control of Aggregates>

A method of controlling the diameter and the distance between the aggregates is not particularly limited. For example, a method of arranging a structure in a matrix so as to separate the aggregates from each other may be used. Examples of such a structure include a cross-linked structure of the polymer material, inorganic dielectric filler, and a phase-separated structure of the polymer material.

### (Control of Aggregates using Cross-Linked Structure)

Cross-linking conditions are not particularly limited and can be appropriately selected such that the size and the distance between the aggregates are in the above-described ranges.

For example, when a polymer material having a carbon-carbon double bond such as natural rubber, nitrile rubber, or butyl rubber is used, the polymer material can be cross-linked by heating with a cross-linking agent such as sulfur, a sulfur compound, an organic peroxide, an amine compound or a metal oxide, preferably, sulfur or an organic peroxide.

When sulfur is used as the cross-linking agent, the additive amount thereof is preferably 1 part by mass to 4 parts by mass with respect to 100 parts by mass of the polymer material. In addition, optionally, a cross-linking auxiliary agent such as zinc oxide, magnesium oxide, stearic acid, or amines and a cross-linking promoter such as thiazoles or thiuram disulfides can be used.

The organic peroxide which can be used as the cross-linking agent is not particularly limited, and examples thereof include dialkyl peroxides such as dicumyl peroxide (DCP), or 2,5-dimethyl-2,5-di(t-butylperoxy)hexane; and peroxyketals such as 1,1-bis(t-butylperoxy)-3,3,5-trimethylcyclohexane or 1,1-bis(t-hexylperoxy)-3,3,5-trimethylcyclohexane. Among these, dicumyl peroxide and 1,1-bis(t-butylperoxy)-3,3,5-trimethylcyclohexane are preferable. When the organic peroxide is used, the additive amount thereof is preferably 0.5 parts by mass to 3 parts by mass with respect to 100 parts by mass of the polymer material.

### (Control of Aggregates Using Inorganic Dielectric Filler)

The inorganic dielectric filler used to control the aggregates is not particularly limited, and examples thereof include barium titanate, strontium titanate, calcium titanate, titanium oxide, and insulating carbon. Among these, barium titanate and titanium oxide are preferable, and titanium oxide is more preferable.

The particle size and the amount of the inorganic dielectric filler added vary depending on the types of the polymer material, the conductive filler, and the inorganic dielectric filler to be used and the amount of the conductive filler. For example, when natural rubber or nitrile rubber is used as the polymer material, 2 parts by mass to 4 parts by mass of a carbon fiber with respect to the polymer material is used as the conductive filler, and titanium oxide is used as the inorganic dielectric filler, the particle size of the inorganic dielectric filler is preferably 5 nm to 100 nm and more preferably 10 nm to 20 nm, and the amount of the inorganic dielectric filler added is preferably 0.5 parts by mass to 200 parts by mass and more preferably 1 part by mass to 100 parts by mass with respect to 100 parts by mass of the polymer material.

### (Control of Aggregates Using Sea-Island-Structure)

When the phase-separated structure of the polymer material is used to control the aggregates, it is preferable that the polymer material be controlled to have a sea-island structure. The polymer material used at this time is not particularly limited as long as it is a combination of two or more types of polymer materials which are mutually insoluble. For example, natural rubber and nitrile rubber, polyamide 6 and a styrene-acrylonitrile copolymer, polyamide 6 and polystyrene, polypropylene and ethylene propylene rubber, polyvinylidene fluoride (PVDF) and polylactic acid (PLA), or polylactic acid (PLA) and polybutylene succinate (PBS) can be used. Among these, a combination of natural rubber and nitrile rubber is preferably used. The dispersed particle size of the island phase varies depending on the size of the conductive filler to be used and the like. For example, when a vapor-grown carbon fiber having several tens of nanometers of fiber diameter and several micrometers of fiber length is used, the dispersed particle size of the island phase is preferably 1 µm to 10 µm and more preferably 2 µm to 4 µm.

### <Method of Preparing Composite Material A>

A method of preparing the composite material A is not particularly limited, and the composite material A can be obtained by adding the conductive filler to a matrix formed of the polymer material.

### (Addition of Conductive Filler)

A method of adding the conductive filler to the matrix formed of the polymer material is not particularly limited, and a well-known method can be used.

For example, the polymer material, the conductive filler, and, if necessary, other components which are weighed in advance are kneaded using various mixers, kneaders, rolls, and the like.

In addition, a wet method can be used. That is, the polymer material is dissolved or dispersed in a solvent in advance such that the amount thereof is 3 mass% to 20 mass%. When it is difficult to dissolve or disperse the polymer material, the polymer material may be converted into fine particles in advance using a method such as frost shattering. When a combination of two or more types of polymer materials which are mutually insoluble is used as the polymer material, all the polymer materials may be dissolved or dispersed in one liquid, or two types of polymer material solutions may be separately prepared and then mixed. When a cross-linked polymer material is used as the polymer material, the polymer material may be dissolved or dispersed in combination with the cross-linking agent and, if necessary, the cross-linking auxiliary agent and the cross-linking promoter.

Meanwhile, the conductive filler is dispersed in the same solvent as that in which the polymer material is dissolved or dispersed such that the amount of the carbon fiber is 500 mass ppm to 1 mass% with respect to 100 parts by mass of a dispersion medium.

Next, the solution in which the conductive filler is dispersed is added to the polymer material solution to disperse the filler. Then, the solvent is removed from the mixture.

When the inorganic dielectric filler is added to the composite material, the inorganic dielectric filler is dispersed in the same solvent as the conductive filler dispersion and is adjusted such that the amount of the inorganic dielectric filler is 500 mass ppm to 1 mass%. Then, the obtained dispersion is added to the polymer material solution.

A method of dispersing the filler in the solution is not particularly limited, and, for example, a method using a homogenizer can be used.

### (Other Processes)

The composite material can be appropriately molded to be used. A molding method is not particularly limited, and a method such as compression molding can be used.

When the polymer material in the composite material is cross-linked, the cross-linking is performed after removing the solvent. Examples of a cross-linking method include light cross-linking and thermal cross-linking. Among these, thermal cross-linking is preferable. When thermal cross-linking is performed, the temperature and the processing time thereof are not particularly limited and can be appropriately selected depending on the type of the polymer material to be used. For example, when a rubber having a carbon-carbon double bond such as natural rubber, butyl rubber, or nitrile rubber is cross-linked, the temperature and the time are preferably 110°C to 150°C and 15 minutes to 30 minutes, respectively. The thermal cross-linking and the molding process can be performed at the same time.

### [Composite Material B]

The composite material B according to the present invention is not particularly limited as long as it includes at least two conductive layers; and an insulating layer that is inserted between the conductive layers. For example, a three-layer structure (conductive layer/insulating layer/conductive layer) can be adopted.

### <Conductive Layer>

The amount of the conductive filler added to the conductive layers varies depending on the type of the polymer material formed as a matrix and the shape of the conductive filler to be used. For example, when butyl rubber, nitrile rubber, or natural rubber is used as the polymer material and when a carbon fiber having an average fiber diameter of 1 nm to 100 nm and an average fiber length of about 0.5 µm to 50 µm is added as the conductive filler, the amount of the carbon fiber added is preferably 1 part by mass to 30 parts by mass and more preferably 1 part by mass to 20 parts by mass with respect to 100 parts by mass of the polymer material. When the amount of the conductive filler added is in the above-described range, the contact between conductive filler particles is sufficiently obtained, and the conductivity of the conductive layers is increased. In addition, there is no concern that the conductive filler penetrates the insulating layer, and a composite material having high flexibility can be obtained.

It is not necessary that the conductive filler be uniformly present in the conductive layer. Conductive filler may be partially aggregated, and the filling density may be changed in the thickness direction.

The thickness of each of the conductive layers is 1 µm or greater. The thickness of each of the conductive layers is preferably 0.1 mm to 10 mm and more preferably 0.2 mm to 2 mm.

### <Insulating Layer>

The insulating layer includes a polymer material as a matrix. The type of the polymer material may be the same as or different from that used for the conductive layers. In addition, the polymer material used for the insulating layer may be cross-linked or may not be cross-linked. The insulating layer may include the conductive filler in a range where conductivity is not generated. When the insulating layer includes the conductive filler, the distribution of the conductive filler is not necessarily uniform.

The thickness of the insulating layer is 10 nm to 30 µm, is preferably 100 nm to 20 µm, and is more preferably 2 µm to 10 µm.

### <Method of Preparing Composite Material B>

A method of preparing the composite material B is not particularly limited. For example, the composite material B, is obtained as follows.

As in the method of preparing the composite material A, materials such as conductive filler are added to a polymer matrix, and the mixture is appropriately molded into a film shape, thereby obtaining a conductive layer.

Next, a solution in which a polymer material for forming the insulating layer is dissolved or dispersed in a solvent is coated on the conductive layer. Then, the solvent is removed. A coating method is not particularly limited, and a well-known method can be used. Examples of the coating method include methods using a bar coater, spin coating, and screen printing.

A conductive layer is further formed on a surface where the insulating layer is formed, followed by compressing. As a result, a composite material is obtained.

In addition, for example, a method of forming the insulating layer in advance as a self-supported film, interposing this film between conductive layers, and compressing the insulating layer and the conductive layers may also be used.

### [Composite Material C]

The composite material C is obtained by selecting the amount of the conductive filler added in a range of 1 part by mass to 25 parts by mass with respect to 100 parts by mass of the polymer material and dispersing the conductive filler in the polymer material such that the relative dielectric constant is 30 or higher and the dielectric loss tangent is 3 or lower at an AC voltage with a frequency of 100 Hz.

The composite material C is a material obtained by dispersing the conductive filler in the polymer material, but the conductive filler is typically present as aggregates where a predetermined amount of particles are aggregated. Therefore, the material obtained by dispersing the conductive filler in the polymer material mainly refers to a material obtained by dispersing conductive filler aggregates in the polymer material, but includes a material obtained by dispersing the single conductive filler in the polymer material with a well-known method. For example, a composite material obtained by dispersing a single carbon nanotube in the polymer material is also included.

### <Method of Preparing Composite Material C>

As a method of preparing the composite material C, the above-described preparation methods can be appropriately used. That is, for example, using the above-described methods of "Control of Aggregates", the relative dielectric constant and the dielectric loss tangent may be controlled.

### (Amount of Conductive Filler Added)

In the composite material according to the present invention, compared to a material of the related art, the increase amount in dielectric loss tangent is decreased relative to the increase in relative dielectric constant depending on the amount of the conductive filler added. However, unless a method of suppressing the increase in dielectric loss tangent is provided, these materials also have regularity in that the relative dielectric constant and the dielectric loss tangent increase substantially monotonously according to the amount of the conductive filler added (however, when the amount of the conductive filler added is greater than a predetermined value, conductive filler particles come into contact with each other to form a conductive path. Therefore, the increase in dielectric loss tangent becomes significant. In addition, by providing the method of suppressing the increase in dielectric loss tangent, the regularity of the monotonous increase in dielectric loss tangent can be changed). By obtaining a relationship between the amount of the conductive filler added; and the relative dielectric constant and the dielectric loss tangent in advance, the additive amount of the conductive filler capable of obtaining a desired relative dielectric constant and a desired dielectric loss tangent in the ranges defined by the composite material C can be determined. The dielectric properties (relative dielectric constant and dielectric loss tangent) can be adjusted and controlled using other methods (for example, adjustment of kneading conditions).

### [Use of Composite Materials]

In the composite material according to the present invention, unlike a composite material including a polymer material of the related art as a base material, the trade-off relationship between relative dielectric constant and dielectric loss tangent is alleviated, and the relative dielectric constant is higher and the dielectric loss is lower than those of the composite material including a polymer material of the related art as a base material. In addition, since the polymer material can be used as a matrix, various properties can be imparted. For example, when an elastomer such as rubber is used as the polymer material, the composite material has flexibility. Therefore, in the composite material, a variety of effects can be expected in uses requiring these properties, for example, when electromagnetic waves are transmitted and received, the composite material can be used as a dielectric layer which is arranged between electrodes so as to efficiently transmit and receive electromagnetic waves. For example, as described in Japanese Unexamined Patent Application, First Publication No. 2010-16592, effects can be expected as an interface interposed between radio wave transmission media, or effects of contributing to the stabilization of an electromagnetic field and the output control can be obtained during wireless power supply such as electromagnetic induction, electromagnetic resonance, or magnetic resonance.

### «Transmission Sheet»

"Transmission sheet" described in the present invention refers to a member constituting a transmission unit which is used for a non-contact power transmission system in which a transmission electrode and a reception electrode are arranged to be close to each other to transmit power, and refers to a member constituting portions other than electrodes. "Sheet" of "transmission sheet" is merely used as an expression which describes a commonly-used shape and is not limited to a thinly spread shape.

The transmission sheet according to the present invention can be used in a transmission unit on both a transmission side and a reception side. In addition, the transmission sheet can be used in a transmission unit of an electric field coupling type non-contact power transmission system including both a type in which a series resonance circuit or a parallel resonance circuit using resonance is adopted and a type in which an active capacitor circuit not using resonance is adopted, or can be used in a transmission unit of the other non-contact power transmission systems. In addition, the non-contact power transmission system is not particularly limited, and the transmission sheet can be used in a transmission unit of non-contact power transmission systems in various fields including mobile devices such as mobile phones or transport devices such as automobiles.

In addition, the transmission sheet according to the present invention can be used in a shape suitable for a non-contact power transmission system to be used.

In addition, within a range not impairing the effects of the present invention, the transmission sheet according to the present invention can be used in the form including other layers.

Since the transmission sheet according to the present invention includes a composite material including a polymer material as a base material, the softness and the flexibility are higher than those of a metal, a ceramic, or the like.

Therefore, in a configuration in which the transmission sheet is formed on a transmission electrode or a reception electrode, even if convex or concave portions or strains are present on a surface of the electrode, the transmission sheet is deformed to conform to the shape of the electrode. Therefore, the adhesion between the transmission sheet and the electrode is high, and thus the electrostatic capacitance can be improved.

Further, in a configuration in which the transmission sheet is formed on an electrode, when the transmission sheet is brought into contact (close contact) with a counter electrode during power transmission, the transmission sheet can be deformed to conform to the surface shape of the counter electrode. As a result, the electrostatic capacitance can be improved.

For example, in an electric field coupling type non-contact power transmission system in which a table mat or the like is placed on an exposed hard metal electrode, and a mobile phone is placed thereon to be supplied with power, when a back surface of the mobile phone is curved, the metal electrode and the table mat (transmission electrode side) are not in wide surface contact with but in point contact with the mobile phone (reception electrode side). In order to improve the capacitance, a wide contact (close contact) surface is important. Therefore, the above-described contact (close contact) state is not desirable. On the other hand, when the transmission sheet according to the present invention is used, a wide contact (close contact) area can be secured due to the deformation of the transmission sheet. As a result, a high electrostatic capacitance can be obtained. Further, the transmission sheet according to the present invention is inexpensive and superior in moldability.

### (First Embodiment)

A transmission sheet according to a first embodiment of the present invention is formed of one of the composite materials A to C.

Even when the transmission sheet according to the first embodiment includes a low dielectric insulating layer such as a casing thereon, the capacitance is high, and high output can be obtained.

The thickness of the transmission sheet according to the first embodiment is preferably 0.1 mm to 10 mm. This is because, in this range, the following effects can be obtained. The strength as a self-supported film can be obtained, a superior adhesion can be obtained, the volume of a transmission device is not large, and the weight thereof is small. In addition, the electrostatic capacitance does not deteriorate, and a sufficient transmission capability can be obtained.

In the transmission sheet according to the first embodiment, the properties thereof can be adjusted and controlled by controlling preparation conditions such as the type of the polymer material, whether or not the polymer material is cross-linked, the type of the conductive filler, the morphology (the diameter of the aggregates and the distance between the aggregates) and the concentration of the conductive filler, or whether or not the inorganic conductive filler is present. In addition, the properties of the transmission sheet can be adjusted and controlled using a well-known method.

According to the requirements of a client, a transmission sheet having properties (for example, conductivity, relative dielectric constant, and dielectric loss tangent) suitable for configurations (for example, the transmission sheet is formed on an electrode directly or with an insulating layer interposed therebetween, or a protective layer is formed on the transmission sheet) of a transmission unit including the transmission sheet can be used.

### (Second Embodiment)

A transmission sheet according to a second embodiment of the present invention includes a functional composite material layer according to the first embodiment and a first insulating layer in this order. The first insulating layer may be provided on both surfaces of the functional composite material layer.

The thickness of the functional composite material layer is preferably 0.1 mm to 10 mm. This is because, in this range, the following effects can be obtained. The strength as a self-supported film can be obtained, a superior adhesion can be obtained, the volume of a transmission device is not large, and the weight thereof is small. In addition, the electrostatic capacitance does not deteriorate, and a sufficient transmission capability can be obtained.

A material of the first insulating layer is not particularly limited as long as it is a polymer material which has an insulating property (a volume resistivity of 1×10¹⁰ (Ω·cm) or higher) and does not impair adhesion, and examples thereof include polyimide, silicone resin, a fluoropolymer, polyurethane, acrylic resin, polycarbonate, polyolefin resin such as polyethylene or polypropylene, polyester, epoxy resin, polyamide, a styrene-acrylonitrile copolymer, polystyrene, vinyl acetate, polylactic acid (PLA), various engineering plastics, natural rubber (NR), or synthetic rubber (SR). Examples of the synthetic rubber (SR) include isoprene rubber, butadiene rubber, styrene-butadiene rubber, ethylene-propylene rubber (EPDM), chloroprene rubber, acrylic rubber, chlorosulfonated polyethylene rubber, urethane rubber, silicone rubber, butyl rubber (IIR), nitrile-butadiene rubber (NBR), fluorine-containing rubber, ethylene vinyl acetate rubber, and epichlorohydrin rubber (ECO). Preferably, natural rubber, EPDM, polyethylene, polypropylene, ABS resin, polyamide, PET, PTFE, polyimide, vinyl acetate, or polystyrene can be used. The thickness of the first insulating layer is preferably 5 µm to 5 mm. When the thickness of the first insulating layer is less than 5 µm, the strength is decreased. When the thickness of the first insulating layer is greater than 5 mm, the electrostatic capacitance is decreased.

In the transmission sheet according to the second embodiment, the properties thereof and the relative dielectric constant and the dielectric loss tangent at a desired frequency can be adjusted and controlled by being combined with the first insulating layer and controlling preparation conditions such as the type of the polymer material, whether or not the polymer material is cross-linked, the type of the conductive filler, the morphology and the concentration of the conductive filler, or whether or not the inorganic conductive filler is present.

### «Transmission Unit»

"Transmission unit" described in the present invention refers to a transmission unit used for a non-contact power transmission system in which a transmission electrode and a reception electrode are arranged to be close to each other to transmit power, and refers to a member including an electrode and a transmission sheet. The shape of "the transmission unit" is not limited.

The transmission unit according to the present invention can be used as a transmission unit on both a transmission side and a reception side. In addition, the transmission unit can be used as a transmission unit of an electric field coupling type non-contact power transmission system including both a type in which a series resonance circuit or a parallel resonance circuit using resonance is adopted and a type in which an active capacitor circuit not using resonance is adopted, or can be used as a transmission sheet of the other non-contact power transmission systems. In addition, the non-contact power transmission system is not particularly limited, and the transmission unit can be used as a transmission unit of non-contact power transmission systems in various fields including mobile devices such as mobile phones or transport devices such as automobiles.

In addition, the transmission unit according to the present invention can be used in a shape suitable for a non-contact power transmission system to be used.

In addition, within a range not impairing the effects of the present invention, the transmission unit according to the present invention can be used in the form including other layers.

### (First Embodiment)

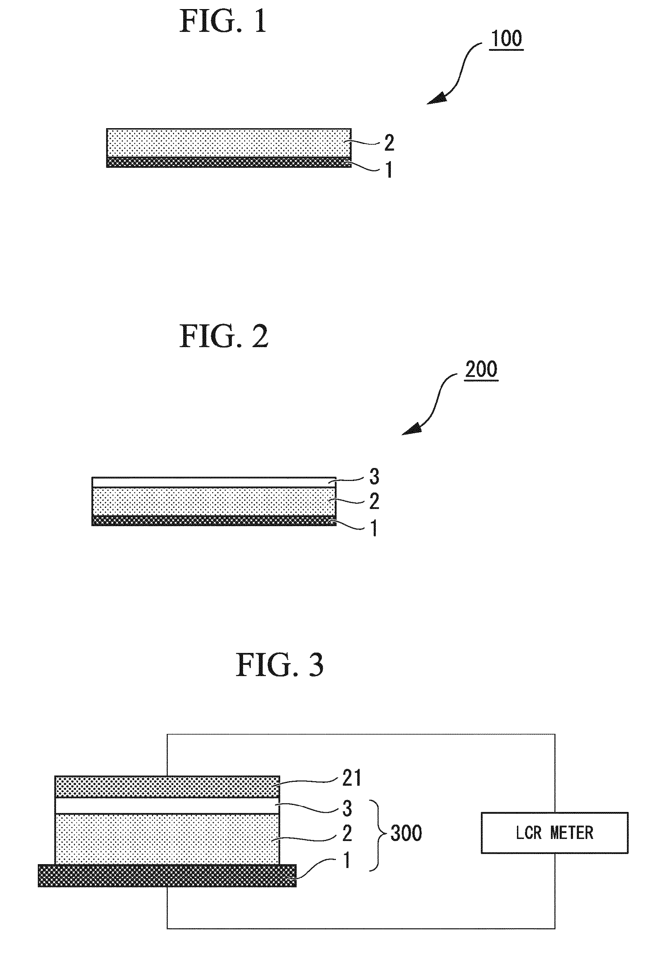

FIG. 1 is a diagram schematically illustrating a transmission unit according to the first embodiment.

A transmission unit 100 according to an embodiment of the present invention is a transmission unit used for a non-contact power transmission system in which a transmission electrode and a reception electrode are arranged to be close to each other to transmit power. The transmission unit includes an electrode 1 and a functional composite material layer 2 in this order.

The functional composite material layer 2 can be formed of any one of the composite materials A to C.

Since the functional composite material layer 2 which is formed on the electrode 1 in the transmission unit 100 is formed of the composite material including a polymer material as a base material, the softness and the flexibility are higher than those of a metal, a ceramic, or the like. Thus, even if convex or concave portions or strains are present on a surface of the electrode 1, the functional composite material layer 2 is deformed to conform to the shape. Therefore, the adhesion between the functional composite material layer 2 and the electrode 1 is high, and thus the electrostatic capacitance can be improved.

Further, when the functional composite material layer 2 is brought into contact (close contact) with a counter electrode during power transmission, the functional composite material layer 2 can be deformed to conform to the surface shape of the counter electrode. As a result, the electrostatic capacitance can be improved.

For example, in an electric field coupling type non-contact power transmission system in which a table mat or the like is placed on an exposed hard metal electrode, and a mobile phone is placed thereon to be supplied with power, when a back surface of the mobile phone is curved, the metal electrode and the table mat (transmission electrode side) are not only in wide surface contact with and but in point contact with the mobile phone (reception electrode side). In order to improve the electrostatic capacitance, a wide contact (close contact) surface is important. Therefore, the above-described contact (close contact) state is not desirable. On the other hand, when the transmission unit according to the present invention is used, a wide contact (close contact) area can be secured due to the deformation of the functional composite material layer 2. As a result, a high electrostatic capacitance can be obtained.

The thickness of the functional composite material layer 2 is preferably 0.1 mm to 10 mm. This is because, in this range, the following effects can be obtained. The strength as a self-supported film can be obtained, a superior adhesion can be obtained, the volume of a transmission device is not large, and the weight thereof is small. In addition, the electrostatic capacitance does not deteriorate, and a sufficient transmission capability can be obtained.

The shape of the electrode 1 is not particularly limited.

As a material of the electrode 1, any materials can be used without particular limitation as long as they are conductive. Specifically, for example, metals such as copper, aluminum, or iron, transparent electrodes such as ITO, metal foils, and films obtained by vapor deposition of various metals can be used.

For example, as another material of the electrode, a conductive material including a polymer material as a base material and a conductivity imparting agent (conductive filler) can be used. Since such a material has flexibility, the material can be used for an electrode requiring flexibility. In addition, the functional composite material layer also has flexibility, and thus when the functional composite material layer is combined with the electrode formed of the material, the entire transmission unit can have flexibility.

### <First Insulating Layer>

The transmission unit according to the first embodiment may include the first insulating layer on the functional composite material layer 2.

In an actual non-contact power transmission system, in order to improve durability or the like during use, it is preferable that a protective film be formed on the functional composite material layer. The first insulating layer has a function as the protective film.

In addition, the first insulating layer itself has a function as a dielectric layer of a coupling capacitor.

It can be said that the first insulating layer is a modeling of a casing.

Typically, when a high relative dielectric constant material layer and a protective film having a lower relative dielectric constant than that of the high relative dielectric constant material layer are used together, the total capacity (C) of a series capacitor is determined based on 1/C=1/C1+1/C2 (C1 and C2 represent the capacitance values of the high relative dielectric constant material layer and the protective film, respectively). Therefore, the properties of the high relative dielectric constant material cannot be utilized.

In order to solve a problem of decrease in capacity caused by the protective film having a low dielectric constant, for example a method of directly coating an extremely thin film having a thickness of about 50 µm or less on a surface of a transmission electrode and bringing the extremely thin film into close contact with a reception electrode can be considered. However, since an electrode of the related art is hard, it is difficult to arrange curved surfaces to be in close contact each other (it is difficult to position curved surfaces to be in close contact each other). Therefore, the adhesion is extremely decreased, and thus the output is decreased. On the other hand, in the transmission unit according to the present invention, the flexible functional composite material layer is formed on the electrode, and the protective film (first insulating layer) can be formed on the functional composite material layer. Therefore, the decrease in adhesion can be avoided.

A material of the first insulating layer is not particularly limited as long as it is a polymer material which has an insulating property (a volume resistivity of 1×10¹⁰ (Ω·cm) or higher), and examples thereof include polyimide, silicone resin, a fluoropolymer, polyurethane, acrylic resin, polycarbonate, polyolefin resin such as polyethylene or polypropylene, polyester, epoxy resin, polyamide, a styrene-acrylonitrile copolymer, polystyrene, vinyl acetate, polylactic acid (PLA), various engineering plastics, natural rubber (NR), or synthetic rubber (SR). Examples of the synthetic rubber (SR) include isoprene rubber, butadiene rubber, styrene-butadiene rubber, ethylene-propylene rubber (EPDM), chloroprene rubber, acrylic rubber, chlorosulfonated polyethylene rubber, urethane rubber, silicone rubber, butyl rubber (IIR), nitrile-butadiene rubber (NBR), fluorine-containing rubber, ethylene vinyl acetate rubber, and epichlorohydrin rubber

(ECO). Preferably, natural rubber, EPDM, polyethylene, polypropylene, ABS resin, polyamide, PET, PTFE, polyimide, vinyl acetate, or polystyrene can be used.

The thickness of the first insulating layer is preferably 5 µm to 5 mm. In this range, the strength of the insulating layer is maintained, a decrease in electrostatic capacitance is suppressed, and a sufficient transmission capability is easily obtained.

### <Second Insulating Layer>

The transmission unit according to the first embodiment may further include a second insulating layer between the electrode 1 and the functional composite material layer 2.

This second insulating layer can function as a dielectric layer. In a configuration in which the first insulating layer and/or the second insulating layer is provided, the first insulating layer and/or the second insulating layer can function as a dielectric layer.

As a material of the second insulating layer, the materials of the first insulating layer and a cyano acrylate-based adhesive such as ethyl cyanoacrylate can be used. Examples of the adhesive include cyano acrylate-based adhesives such as ethyl cyanoacrylate, epoxy resin-based adhesives, silicone-based adhesives, styrene-butadiene rubber solution-based adhesives, and aqueous polymer-isocyanate-based adhesives. The second insulating layer can be provided by treating a surface of an electrode to form a surface layer such as an oxide coating film thereon or by forming an insulating coating film (such as epoxy resin) on an electrode.

The thickness of the second insulating layer is preferably 5 µm to 5 mm. When the thickness of the second insulating layer is less than 5 µm, the strength is decreased. When the thickness of the second insulating layer is greater than 5 mm, the electrostatic capacitance is decreased.

### (Second Embodiment)

FIG. 2 is a diagram schematically illustrating a transmission unit according to the second embodiment.

A transmission unit 200 according to the second embodiment is a transmission unit used for a non-contact power transmission system in which a transmission electrode and a reception electrode are arranged to be close to each other to transmit power. The transmission unit includes an electrode 1, a functional composite material layer 2, and a first insulating layer 3 in this order.

The functional composite material layer 2 can be formed of any one of the composite materials A to C.

Compared to the transmission unit according to the first embodiment, the transmission unit according to the second embodiment is characterized in that it includes the first insulating layer as an essential component.

Within a range not impairing the effects of the present invention, the composite material constituting the functional composite material layer may further include a cross-linking agent, a cross-linking auxiliary agent, a cross-linking promoter, and an inorganic dielectric in addition to another polymer material and the conductive filler.

As the electrode 1, the same electrode as that of the transmission unit according to the first embodiment can be used.

FIG. 3 is a diagram illustrating a configuration in which the functional composite material layer 2, the PTFE film (first insulating layer) 3, and a copper electrode 21 are formed on the SUS electrode 1 in order. The configuration in which the SUS electrode 1, the functional composite material layer 2, and the first insulating layer 3 are formed corresponds to a transmission unit 300 in an electric field coupling type non-contact power transmission system.

In the transmission unit 300, the functional composite material layer 2 corresponds to "the transmission sheet" according to the first embodiment, and the functional composite material layer 2 and the PTFE film (first insulating layer) 3 correspond to "the transmission sheet" according to the second embodiment.

### <Second Insulating Layer>

The transmission unit according to the second embodiment may include the second insulating layer between the electrode 1 and the functional composite material layer 2.

This second insulating layer can function as a dielectric layer. Accordingly, the functional composite material layer 2 and the second insulating layer function as a dielectric layer together.

In a configuration in which the first insulating layer and/or the second insulating layer is provided, the first insulating layer and/or the second insulating layer can function as a dielectric layer. Therefore, the functional composite material layer and these layers can function as a dielectric layer together.

As a material of the second insulating layer, the materials of the first insulating layer and a cyano acrylate-based adhesive such as ethyl cyanoacrylate can be used.

Examples of the adhesive include cyano acrylate-based adhesives such as ethyl cyanoacrylate, epoxy resin-based adhesives, silicone-based adhesives, styrene-butadiene rubber solution-based adhesives, and aqueous polymer-isocyanate-based adhesives. The second insulating layer can be provided by treating a surface of an electrode to form a surface layer such as an oxide coating film thereon or by forming an insulating coating film (such as epoxy resin) on an electrode.

The thickness of the second insulating layer is preferably 5 µm to 5 mm. In this range, the strength of the insulating layer is maintained, a decrease in electrostatic capacitance is suppressed, and a sufficient transmission capability is easily obtained.

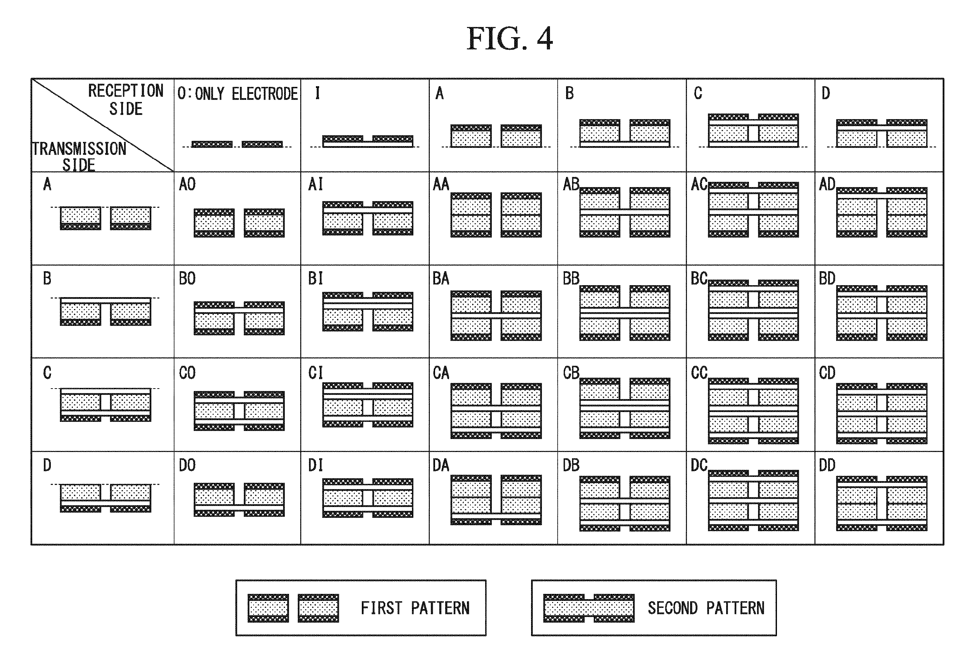

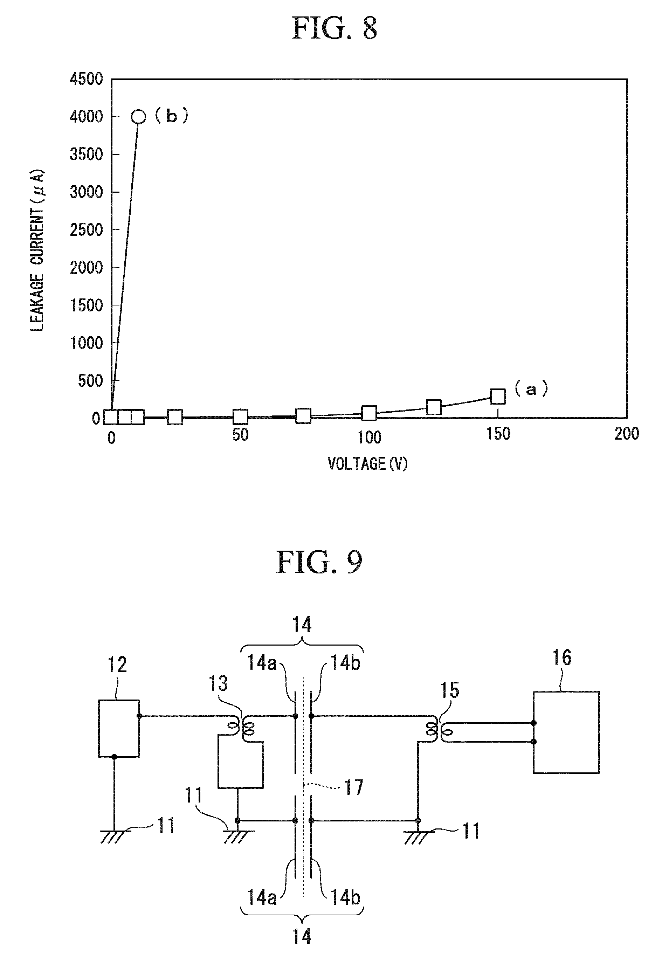

Examples of combinations of a transmission-side configuration and a reception-side configuration in a non-contact power transmission system using the transmission sheet or the transmission unit according to the present invention are as illustrated in FIG. 4. The transmission-side configuration includes four types including: electrode/functional composite material layer; electrode/functional composite material layer/first insulating layer; electrode/second insulating layer/functional composite material layer; and electrode/second insulating layer/functional composite material layer/first insulating layer. The reception-side configuration includes six types including: only electrode; electrode/second insulating layer; electrode/functional composite material layer; electrode/functional composite material layer/first insulating layer; electrode/second insulating layer/functional composite material layer; and electrode/second insulating layer/functional composite material layer/first insulating layer. That is, 24 types of combinations can be made. However, the combinations are not limited to these 24 types of combinations. As illustrated in FIG. 9, when a circuit in which two electrodes are provided as a set on each of a transmission side and a reception side is used, there are two cases: a case (first pattern) in which the functional composite material layer is laminated on each electrode; and a case (second pattern) in which the functional composite material layer is laminated continuously on the two reception-side electrodes. In a lower section of FIG. 4, by using AO type as an example, configurations of the first pattern and the second pattern are illustrated. In the schematic diagram illustrated in FIG. 4, all the combinations are the first pattern, but the configuration of the second pattern can also be applied thereto.

The properties (relative dielectric constant, dielectric loss tangent, and conductivity) of the materials constituting the functional composite material layer and the composite material according to the present invention can be adjusted and controlled by controlling the amount of the conductive filler added and the aggregates of the conductive filler and using the methods described in this specification and/or well-known methods.

### [Examples]

Hereinafter, the present invention will be described in more details using Examples. However, the present invention is not limited to the following examples.

In this specification, the results of the respective preparation conditions are shown by comparing Examples and composite materials thereof to Comparative Examples and comparative composite materials, and it is not implied that Comparative Examples and comparative composite materials are not included in the range of the present invention.

In Examples and Comparative Examples, the following materials were used.

Natural rubber (NR; manufactured by Kato Sansho. Co., Ltd., trade name: SMR-CV-60)
Butyl rubber (manufactured by JSR Corporation, trade name: BUTYL 268) Nitrile rubber (NBR; manufactured by Zeon Corporation, trade name: ND4050)
Vapor-grown carbon fiber (manufactured by Showa Denko K.K., trade name: VGCF (registered trademark)-X, average fiber diameter: 10 nm to 15 nm, average fiber length: 3 µm)
Sulfur powder (chemical)
Dicumyl peroxide (special grade chemical)
Zinc oxide (special grade chemical)
Stearic acid (special grade chemical)
Tetrakis(2-ethylhexyl)thiuram disulfide (manufactured by Ouchi Shinko
Chemical Industrial Co., Ltd., trade name: NOCCELER TOT-N)
Titanium Oxide (manufactured by Showa Titanium K.K., trade name: SUPER-TITANIA (registered trademark) F-6, equivalent particle size: 15 nm)
Toluene (special grade chemical)
Butyl acetate (special grade chemical)

The relative dielectric constant and the dielectric loss tangent of each of composite materials obtained in Examples and Comparative Examples were measured at 4 points using a LCR meter, and the average values thereof were obtained. Unless specified otherwise, the measurement was performed at a temperature of 25°C and a frequency of 100 Hz. In addition, the film area was equivalent to the area of the circle with a diameter of 25 mm.

In each of the composite materials prepared in Examples and Comparative Examples, the average diameter of aggregates of conductive filler; and the average distance between the aggregates were obtained from the following procedure. The obtained composite material was cut into a piece having a size of width 0.5 mm×length 3 mm using a razor blade. This piece was cut into a 5 µm-thick slice using an ultramicrotome (manufactured by Leica Microsystems, trade name: EM-FCS) such that a surface in a direction perpendicular to a principal surface of the uncut composite material was an observation surface. By observing the obtained slice using a transmission microscope, the diameter of aggregates of a vapor-grown carbon fiber; and the distance between the aggregates were measured.

### (Examples 1-1 to 1-6)

20 g of butyl rubber as the polymer material; 4 g of sulfur powder as the cross-linking agent; 10 g of zinc oxide and stearic acid 2 g of stearic acid as the cross-linking auxiliary agent; and 3 g of tetrakis(2-ethylhexyl)thiuram disulfide as the cross-linking promoter were added to 174 g of toluene and were stirred to be dissolved therein (polymer solution). In addition, 0.03 g of vapor-grown carbon fiber as the conductive filler was added to 104 g of toluene, followed by dispersing with a homogenizer (carbon solution). Next, the carbon solutions were added to 28.5 g of weighed polymer solutions such that the amount of the conductive filler added were as shown in Table 1, respectively. Next, the conductive filler were dispersed using a homogenizer. The obtained dispersions were stirred at room temperature for 24 hours, and toluene was removed therefrom in a vacuum dryer at 80°C, followed by kneading with triple rolls at 100°C. As a result, rubber compositions were obtained.

A square metal frame with no top and bottom having an inside dimension of length 100 mmxwidth 100 mm and a height of 0.3 mm was prepared and was installed on a larger stainless steel plate than the metal frame. The rubber compositions were put into the metal frame in amount corresponding to the internal capacity of the metal frame, and a stainless steel plate was laminated on the metal frame to be installed in a compression molding machine. The rubber compositions were compressed at a pressure of 20 MPa and a temperature of 100°C for 5 minutes, were heated to 160°C while being compressed, and were held in this state for 25 minutes to cross-link butyl rubber. As a result, composite materials 1-1 to 1-6 were obtained.

### (Comparative Examples 1-1 to 1-3)

Comparative composite materials 1-1 to 1-3 were obtained with the same method as that of Examples 1-1 to 1-6, except that the amount of the conductive filler in the rubber compositions were 0 part by mass (0 phr), 0.5 parts by mass (0.5 phr), and 0.75 parts by mass (0.75 phr) with respect to 100 parts by mass of the polymer material, respectively.

**[Table 1]**

| | Composite Material | Amount of Conductive Filler Added (Parts by Mass: With Respect To 100 Parts by Mass of Polymer Material) |
|---|---|---|
| Example 1-1 | Composite Material 1-1 | 1 |
| Example 1-2 | Composite Material 1-2 | 1.5 |
| Example 1-3 | Composite Material 1-3 | 2 |
| Example 1-4 | Composite Material 1-4 | 3 |
| Example 1-5 | Composite Material 1-5 | 4 |
| Example 1-6 | Composite Material 1-6 | 5 |
| Comparative Example 1-1 | Comparative Composite Material 1-1 | 0 |
| Comparative Example 1-2 | Comparative Composite Material 1-2 | 0.5 |
| Comparative Example 1-3 | Comparative Composite Material 1-3 | 0.75 |

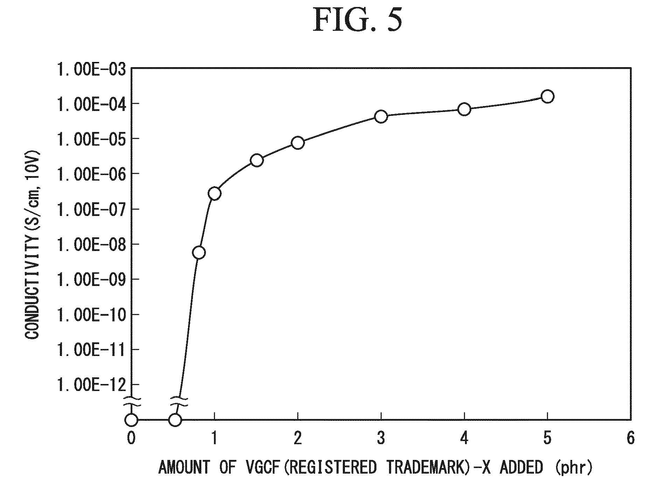

A voltage was applied to the composite materials obtained in Examples 1-1 to 1-6 and the comparative composite materials obtained in Comparative Examples 1-1 to 1-3 to measure a conductivity. The results of the measured conductivity values are shown in Table 5. In the measurement, a voltage of 10 V was applied to the composite materials of Examples 1-1 to 1-6 and the comparative composite material of Comparative Example 1-3. In the comparative composite materials of Comparative Examples 1-1 and 1-2, due to their high insulating property, the dielectric constant was not able to be measured with the application of a voltage of 10 V. Therefore, a voltage of 600 V was applied to the comparative composite materials of Comparative Examples 1-1 and 1-2 to measure the conductivity. It was found from FIG. 5 that, when the amount of vapor-grown carbon fiber (conductive filler) was changed in a range from 0 part by mass to 5 parts by mass with respect to 100 parts by mass of natural rubber (polymer material), a percolation threshold was present near 1 part by mass of the amount of vapor-grown carbon fiber added.

### (Example 2-1)

A rubber composition was obtained with the same method as that of Example 1-3.

The obtained rubber composition was molded and cross-linked with the same method as that of Example 1-3, except that the cross-linking temperature was set to 140°C. As a result, a composite material 2-1 was obtained. The measurement results of the relative dielectric constant and the dielectric loss tangent are shown in Table 2.

### (Example 2-2)

A composite material 2-2 was obtained with the same method as that of Example 1, except that the temperature during cross-linking was set to 150°C. The composite material 2-2 was black when observed by visual inspection. The measurement results of the relative dielectric constant and the dielectric loss tangent are shown in Table 2.

### (Comparative Example 2-1)

A comparative composite material 2-1 was obtained with the same method as that of Example 2-1, except that the compression using the compression molding machine was performed at 100°C for 25 minutes. However, mechanical properties of the comparative composite material 2-1 were extremely weak, and it is difficult to hold the shape thereof. Therefore, a test sample was not able to be obtained, and the relative dielectric constant and the dielectric loss tangent were not able to be measured.

### (Comparative Example 2-2)

A comparative composite material 2-2 was obtained with the same method as that of Example 1, except that the cross-linking agent, the cross-linking auxiliary agent, and the cross-linking promoter were not added during the preparation of the butyl rubber solution. However, the comparative composite material 2-2 was deformed, and it is difficult to hold the shape thereof. Therefore, a test sample was not able to be obtained, and the relative dielectric constant and the dielectric loss tangent were not able to be measured.

**[Table 2]**

| | Example 2-1 | Example 2-2 | Comparative Example 2-1 | Comparative Example 2-2 |
|---|---|---|---|---|
| Composite Material | Composite Material 2-1 | Composite Material 2-2 | Comparative Composite Material 2-1 | Comparative Composite Material 2-2 |
| Polymer Material | Butyl Rubber | Butyl Rubber | Butyl Rubber | Butyl Rubber |
| Cross-Linking Agent | Added | Added | Added | Not Added |
| Cross-Linking Temperature (°C) | 140 | 150 | 100 | 140 |
| Cross-Linking Time (min) | 25 | 25 | 25 | 25 |
| Amount of Conductive Filler Added (phr) | 2 | 2 | 2 | 2 |
| Amount of Inorganic Dielectric Filler Added (phr) | 0 | 0 | 0 | 0 |
| Relative Dielectric Constant | 1769 | 1630 | - | - |
| Dielectric Loss Tangent | 0.063 | 0.076 | - | - |

### (Example 3-1)

53 g of butyl acetate was added to 12 g of natural rubber as the polymer material, followed by stirring to swell and dissolve natural rubber (natural rubber solution). In addition, 12 g of nitrile rubber as another polymer material was frost-shattered, and 53 g of butyl acetate was added thereto, followed by stirring to swell and dissolve nitrile rubber (nitrile rubber solution). The obtained two types of rubber solutions were mixed such that natural rubber solution:nitrile rubber solution=7:3 was satisfied by mass ratio. Further, 1 part by mass of dicumyl peroxide was added to the mixed solution with respect to 100 parts by mass of the polymer material. As a result, a mixed rubber solution was prepared.

In addition, 0.36 g of vapor-grown carbon fiber as the conductive filler was added to 35 g of butyl acetate, followed by dispersing with a homogenizer (carbon solution).

35 g of the carbon solution and 35 g of butyl acetate were added to 65 g of the mixed rubber solution, and the conductive filler was dispersed, followed by stirring at room temperature for 24 hours. Further, toluene was removed in a vacuum drier at 80°C. As a result, a rubber composition was obtained.

The obtained rubber composition was molded and cross-linked with the same method as that of Example 2-1, except that the cross-linking time was set to 20 minutes. As a result, a composite material 3-1 was obtained.

The measurement results of the relative dielectric constant and the dielectric loss tangent are shown in Table 3.

### (Example 3-2)

A composite material 3-2 was obtained with the same method as that of Example 3-1, except that a solution in which 0.06 g of titanium oxide was dispersed in 35 g of butyl acetate was added to the mixed rubber solution instead of 35 g of butyl acetate. The measurement results of the relative dielectric constant and the dielectric loss tangent are shown in Table 3.

### (Example 3-3)

A composite material 3-3 was obtained with the same method as that of Example 3-2, except that the amount of titanium oxide dispersed in 35 g of butyl acetate was set to 0.09 g. The measurement results of the relative dielectric constant and the dielectric loss tangent are shown in Table 3.

### (Example 3-4)

A composite material 3-4 was obtained with the same method as that of Example 3-2, except that the amount of titanium oxide dispersed in 35 g of butyl acetate was set to 0.12 g. The measurement results of the relative dielectric constant and the dielectric loss tangent are shown in Table 3.

### (Example 3-5)

A composite material 3-5 was obtained with the same method as that of Example 3-1, except that the mixing ratio of the two-types of rubber compositions was set to natural rubber solution:nitrile rubber solution=3:7. The measurement results of the relative dielectric constant and the dielectric loss tangent are shown in Table 3.

### (Example 3-6)

A composite material 3-6 was obtained with the same method as that of Example 3-5, except that a solution in which 0.06 g of titanium oxide was dispersed in 35 g of butyl acetate was added to the mixed rubber solution instead of 35 g of butyl acetate. The measurement results of the relative dielectric constant and the dielectric loss tangent are shown in Table 3.

### (Example 3-7)

A composite material 3-7 was obtained with the same method as that of Example 3-6, except that the amount of titanium oxide dispersed in 35 g of butyl acetate was set to 0.12 g. The measurement results of the relative dielectric constant and the dielectric loss tangent are shown in Table 3.

### (Example 3-8)

A composite material 3-8 was obtained with the same method as that of Example 3-1, except that a solution obtained by adding 12 g of natural rubber to 53 g of butyl acetate was used instead of the mixed rubber solution. The measurement results of the relative dielectric constant and the dielectric loss tangent are shown in Table 3.

**[Table 3]**

| | Example 3-1 | Example 3-2 | Example 3-3 | Example 3-4 | Example 3-5 | Example 3-6 | Example 3-7 | Example 3-8 |
|---|---|---|---|---|---|---|---|---|
| Composite Material | Composite Material 3-1 | Composite Material 3-2 | Composite Material 3-3 | Composite Material 3-4 | Composite Material 3-5 | Composite Material 3-6 | Composite Material 3-7 | Composite Material 3-8 |
| Polymer Material | NR:NBR =7:3(W/W) | NR:NBR =7:3(W/W) | NR:NBR =7:3(W/W) | NR:NBR =7:3(W/W) | NR:NBR 3:7(W/W) | NR:NBR =3:7(W/W) | NR:NBR =3:7(W/W) | Natural Rubber |
| Cross-Linking Agent | Added | Added | Added | Added | Added | Added | Added | Added |
| Cross-Linking Temperature (°C) | 140 | 140 | 140 | 140 | 140 | 140 | 140 | 140 |
| Cross-Linking Time (min) | 20 | 20 | 20 | 20 | 20 | 20 | 20 | 20 |
| Amount of Conductive Filler Added (phr) | 3 | 3 | 3 | 3 | 3 | 3 | 3 | 3 |
| Amount of Inorganic Dielectric Filler Added (phr) | 0 | 2 | 3 | 4 | 0 | 3 | 4 | 0 |
| Relative Dielectric Constant | 1752 | 1723 | 2214 | 1715 | 1521 | 2369 | 4190 | 754 |
| Dielectric Loss Tangent | 0.04 | 0.11 | 0.069 | 0.096 | 0.059 | 0.083 | 0.085 | 0.5 |

From the comparison of the composite materials 3-1 and 3-5 to the composite material 3-8, it was found that the relative dielectric constant is increased and the dielectric loss tangent is decreased by using two or more types of mutually insoluble polymer materials in combination as the polymer material. The reason is presumed to be that the conductive filler was concentrated in the island phase, and aggregates of the conductive filler having an appropriate size and an appropriate distance between the aggregates were formed.

In addition, from the comparison of the composite material 3-5 to the composite materials 3-6 and 3-7, it was found that the relative dielectric constant can be increased while suppressing the dielectric loss tangent to be low by the addition of the inorganic dielectric filler. The reason is presumed to be that the distance between the aggregates of the conductive filler were maintained to be appropriate by the presence of the inorganic dielectric filler.

### (Comparative Example 3)

3 g of natural rubber and 0.03 g of dicumyl peroxide as the polymer material were added to 26 g of butyl acetate, followed by stirring to swell and dissolve natural rubber and dicumyl peroxide (polymer solution). Separately, 0.03 g of vapor-grown carbon fiber as the conductive filler was added to 26 g of butyl acetate, followed by dispersing with an ultrasonic homogenizer (carbon solution). The carbon solution was added to the polymer solution, followed by stirring at room temperature for 24 hours. Next, butyl acetate was removed from the mixed solution in a vacuum dryer at 80°C. As a result, a rubber composition was obtained.

The obtained rubber composition was molded and cross-linked with the same method as that of Example 3-1. As a result, a comparative composite material 3 was obtained.

The measurement results of the relative dielectric constant and the dielectric loss tangent are shown in Table 4.

### (Example 4)

A composite material 4 was obtained with the same method of Comparative Example 3, except that 2.1 g of natural rubber and nitrile rubber 0.9 which was frost-shattered using a frost-shattering machine were used instead of 3 g of natural rubber.

The measurement results of the relative dielectric constant and the dielectric loss tangent are shown in Table 4.

**[Table 4]**

| | Comparative Example 3 | Example 4 |
|---|---|---|
| Composite Material | Comparative Composite Material 3 | Composite Material 4 |
| Polymer Material | Natural Rubber | NR:NBR =7:3 (W/W) |
| Cross-Linking Agent | Added | Added |
| Cross-Linking Temperature (°C) | 140 | 140 |
| Cross-Linking Time (min) | 20 | 20 |
| Amount of Conductive Filler Added (phr) | 1 | 1 |
| Amount of Inorganic Dielectric Filler Added (phr) | 0 | 0 |
| Relative Dielectric Constant | 11.4 | 8.6 |
| Dielectric Loss Tangent | 0.28 | 0.043 |

When the comparative composite material 3 was compared to the composite material 4, the following results were obtained. In the composite material 4 in which two types of mutually insoluble rubbers were used as the polymer material, the dielectric loss tangent was low. On the other hand, in the comparative composite material 3 in which only one type of rubber was used as the polymer material, the dielectric loss tangent was high.

### (Cross-Sectional Observation of Composite Materials)

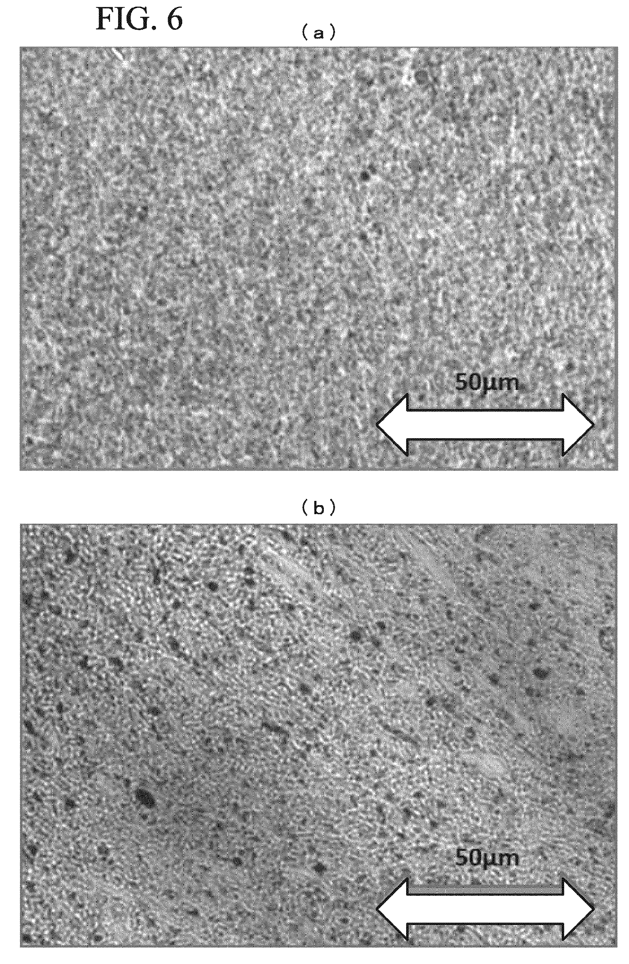

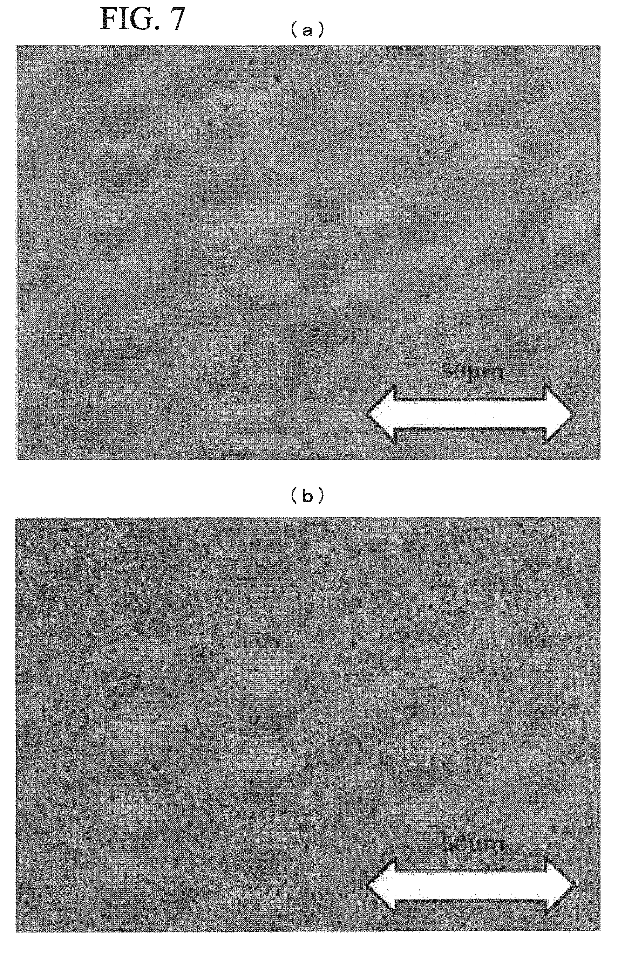

By observing a cross-section of each of the composite materials and the comparative composite materials prepared in Examples and Comparative Examples, the average diameter of the aggregates; and the average distance between the aggregates were obtained. The results are shown in Table 5. In addition, the cross-sectional images of the composite materials 2-2 and 4 are shown in (a) and (b) of FIG. 6, respectively, and the cross-sectional images of the comparative composite materials 2-1 and 3 are shown in (a) and (b) of FIG. 7, respectively. In the comparative composite materials 2-1 and 3, aggregates having a diameter which was greater than or equal to 0.5 nm as a detection limit of an optical microscope, or greater were not able to be observed (in (b) of FIG. 7, black portions are shades derived from the roughness of surfaces of polymer material particles).

**[Table 5]**

| Composite Material | Composite Material 2-2 | Composite Material 4 | Comparative Composite Material 2-1 | Comparative Composite Material 3 |
|---|---|---|---|---|
| Diameter of Aggregates of Conductive Filler (µm) | 3 | 3 | <0.5 | <0.5 |
| Distance between Aggregates of Conductive Filler (µm) | 10 | 30 | Undetectable | Undetectable |
| Relative Dielectric Constant | 1630 | 8.6 | - | 11.4 |
| Dielectric Loss Tangent | 0.076 | 0.043 | - | 0.28 |

The following results were obtained from Table 5. In the composite materials 2-2 and 4 in which the aggregates of the conductive filler having an appropriate diameter were formed at an appropriate distance, the dielectric loss tangent was low.

In addition, from the comparison of the composite material 2-2 to the comparative composite material 2-1 and the comparison of the composite material 4 to the comparative composite material 3, it was found that aggregates having an appropriate diameter and an appropriate distance were easily formed by the polymer material being cross-linked or by the polymer material having a phase-separated structure.

### (Example 5)

A rubber composition was molded with the same method of Example 2-1, except that cross-linking conditions were set to 160°C and 20 minutes. Using this rubber composition, two conductive layers were prepared.

Natural rubber and 1 part by mass of dicumyl peroxide with respect to 100 parts by mass of natural rubber were dissolved in propyl acetate to prepare a solution such that the concentration of natural rubber in the solution was 3 mass%. This solution was coated on a single surface of each of the conductive layers, followed by drying at 80°C for 30 minutes.

Next, the two conductive layers were laminated such that the coated surfaces faced to each other, followed by compression molding at 80°C for 30 minutes. As a result, a 0.5 mm-thick composite material 5 was obtained. In this composite material 5, the relative dielectric constant was 563, and the dielectric loss tangent was 0.75.

A voltage was applied to the obtained composite material 5 to measure a leakage current. The measurement result of the leakage current was shown in (a) of FIG. 8.

### (Comparative Example 4)

A comparative composite material 4 was obtained with the same method as that of Example 5, except that the natural rubber solution was not coated on the surfaces of the conductive layers. Similarly to Example 5, a voltage was applied to the comparative composite material 4 to measure a leakage current. The measurement result of the leakage current was shown in (b) of FIG. 8.

It was found from FIG. 8 that, in the composite material 5 according to the present invention, the withstand voltage was high, and the leakage current is low.

### (Examples 6-1 to 6-4)

Each of the composite materials 3-1 to 3-4 prepared in Examples 3-1 to 3-4 was interposed between the metal electrodes to investigate properties when being used as a transmission unit in a electric field coupling type wireless power supply system (non-contact power transmission system).

That is, as illustrated in FIG. 9, a transmission coil 13 that is connected to a transmitter 12; two pairs of metal electrodes 14 each pair of which include a transmission-side electrode 14a and a reception-side electrode 14b; and a reception coil 15 that is connected to a digital oscilloscope 16 are connected to each other to form an electric field coupling. In this case, as a dielectric 17 with which transmission and reception sheets are coupled, each of the composite materials 3-1 to 3-4 prepared in Examples 3-1 to 3-4 was interposed between the metal electrodes. The transmitter 12, the transmission coil 13, the transmission-side electrode 14a, the reception-side electrode 14b, and the reception coil 15 were connected to grounds 11, respectively. When the transmitter 12 transmits power with 100 kHz and 16 V, the secondary-side voltage of the reception coil 15 was measured with the digital oscilloscope 16 (load resistance: 200 Ω).

The results are shown in Table 6.

### (Comparative Example 5)

Properties of a commercially available comparative composite material 5 obtained by blending ceramic powder into a matrix formed of an acrylonitrile-butadiene-styrene copolymer when being used as the transmission unit were investigated with the same method of as that of Examples 6-1 to 6-4, except that the comparative composite material 5 was used instead of the composite materials 3-1 to 3-4. The results are shown in Table 6.

It was found from Table 6 that the output voltage of an electric field coupling type transmission unit depends on the relative dielectric constant of a material which is used as a dielectric with which transmission and reception sheets are coupled, and it was also found that, when the composite material according to the present invention having a high relative dielectric constant is used, a high output voltage can be obtained.

**[Table 6]**

| | Example 6-1 | Example 6-2 | Example 6-3 | Example 6-4 | Comparative Example 5 |
|---|---|---|---|---|---|
| Composite Material | Composite Material 3-1 | Composite Material 3-2 | Composite Material 3-3 | Composite Material 3-4 | Commercially Available Composite Material |
| Relative Dielectric Constant | 1500 | 1380 | 1800 | 1400 | 4.5 |
| Output Voltage (V) | 4.7 | 4.8 | 5.7 | 4.8 | 0.21 |

### (Example 7)

An AC voltage was applied to a configuration in which a layer (functional composite material layer) formed of the composite material according to the present invention and a copper electrode were formed on a SUS electrode to measure dielectric properties (relative dielectric constant and dielectric loss tangent). The measurement results are shown in Tables 7 and 8. In the tables, the thickness represents the thickness (mm) of the functional composite material layer.

Among the amounts of VGCF-X added shown in Tables 7 and 8, data of 1 phr, 8 phr, and 10 phr are shown as mere reference and are not show as the examples of the present invention.

The functional composite material layer having a thickness of about 0.9 mm was obtained by kneading the polymer material (natural rubber (NR):nitrile-butadiene rubber (NBR)=7:3), VGCF-X (registered trademark, manufactured by Showa Denko K.K.) as the conductive filler, 4 phr of TiO₂ as the inorganic conductive filler, and 1 phr of dicumyl peroxide (DCP) as the cross-linking agent with each other, followed by rolling and compression molding. During the preparation of the functional composite material layer, the amounts of VGCF-X added were 1.5 phr, 2 phr, 4 phr, and 6 phr.

The thickness of the SUS electrode was 2 mm, and the thickness of the copper electrode was 1 mm.

The size of the SUS electrode was 13 cmx 13 cm, and the sizes of the other layers and electrode were 10 cm×10 cm. The area of the functional composite material layer was 10 cmx 10 cm.

The measurement was performed using an LCR meter under conditions of an applied voltage of 1 V and AC frequencies of 100 Hz, 1 kHz, 10 kHz, 600 kHz, and 1 MHz.

**[Table 7]**

| Relative Dielectric Constant | | | | | | |
|---|---|---|---|---|---|---|
| | Frequency(Hz) | | | | | Thickness(mm) |
| | 100 | 1000 | 10000 | 600000 | 1000000 | |
| 1 phr (Reference Example) | 6.78 | 6.32 | 5.95 | 4.98 | 4.81 | 0.91 |
| 1.5 phr | 35 | 18.25 | 8.32 | 6.18 | 5.23 | 0.90 |
| 2 phr | 108 | 42 | 19.6 | 8.47 | 7.98 | 0.899 |
| 4 phr | 3830 | 3040 | 814 | 47.6 | 39.4 | 0.922 |
| 6 phr | 2840 | 2780 | 2690 | 358 | 348 | 0.864 |
| 8 phr (Reference Example) | 3760 | 3700 | 3590 | 1410 | 806 | 0.912 |
| 10 phr (Reference Example) | 4590 | 4500 | 3780 | 2060 | 1100 | 0.929 |

**[Table 8]**

| Dielectric Loss Tangent | | | | | | |
|---|---|---|---|---|---|---|
| | Frequency(Hz) | | | | | Thickness(mm) |
| | 100 | 1000 | 10000 | 600000 | 1000000 | |
| 1 phr (Reference Example) | 5.73×10⁻² | 4.53×10⁻² | 4.54×10⁻² | 9.39×10⁻² | 9.75×10⁻² | 0.91 |
| 1.5 phr | 7.82×10⁻² | 6.02×10⁻² | 5.11×10⁻² | 5.98×10⁻² | 7.41×10⁻² | 0.90 |
| 2 phr | 9.46×10⁻¹ | 7.64×10⁻¹ | 5.42×10⁻¹ | 2.71×10⁻¹ | 2.60×10⁻¹ | 0.899 |
| 4 phr | 4.01×10⁻¹ | 3.67×10⁻¹ | 1.25 | 1.46 | 1.33 | 0.922 |
| 6 phr | 2.9 | 3.16×10⁻¹ | 9.40×10⁻² | 2.07 | 2.39 | 0.864 |
| 8 phr (Reference Example) | 1.03×10 | 1.06 | 1.50×10⁻¹ | 1.11 | 1.80 | 0.912 |
| 10 phr (Reference Example) | 1.95×10 | 2.02 | 3.11×10⁻¹ | 6.78×10⁻¹ | 1.16 | 0.929 |

It was found from Tables 7 and 8 that the relative dielectric constant and the dielectric loss tangent were changed along with changes in the dispersed state of the conductive filler. It is generally known that, when the filler is dispersed in a solution or in a host matrix, there is an optimum concentration suitable for a desired dispersed state. If a high dispersed state is desired, there is a possibility that filler particles may be aggregated both at an optimum concentration used to obtain the high dispersed state or higher and at the optimum concentration or lower. Therefore, the values of the relative dielectric constant and the dielectric loss tangent affected by both the aggregation state and the concentration of the conductive filler are not changed depending on only the concentration of the conductive filler. In addition, the same shall be applied to the frequency properties of the obtained composite material relative to, particularly, the dielectric loss tangent. It is considered that loss derived from DC components contributes to a low frequency, and loss derived from AC components contributes to a high frequency side. Loss factors vary depending on the frequency. Accordingly, regarding the frequency properties, there is an optimum frequency. For example, in Tables 7 and 8, constant regularity was recognized between the concentration and the aggregation state of the conductive filler; and the frequency properties. Using the results of Tables 7 and 8, the composition of the composite material layer having a relative dielectric constant and a dielectric loss tangent suitable for a desired frequency can be determined. By obtaining such regularity from various types of conductive filler and setting optimum conditions, output properties can be controlled.

In the transmission unit or the transmission sheet according to the present invention, by using the properties of the composite material according to the present invention, the additive amount of the conductive filler suitable for a non-contact power transmission system can be selected, and efficient power transmission can be performed.

A person skilled in the art can determine the additive amount of the conductive filler suitable for a non-contact power transmission system by obtaining in advance a relationship (regularity) between the additive amount of the conductive filler; and the relative dielectric constant and the dielectric loss tangent.

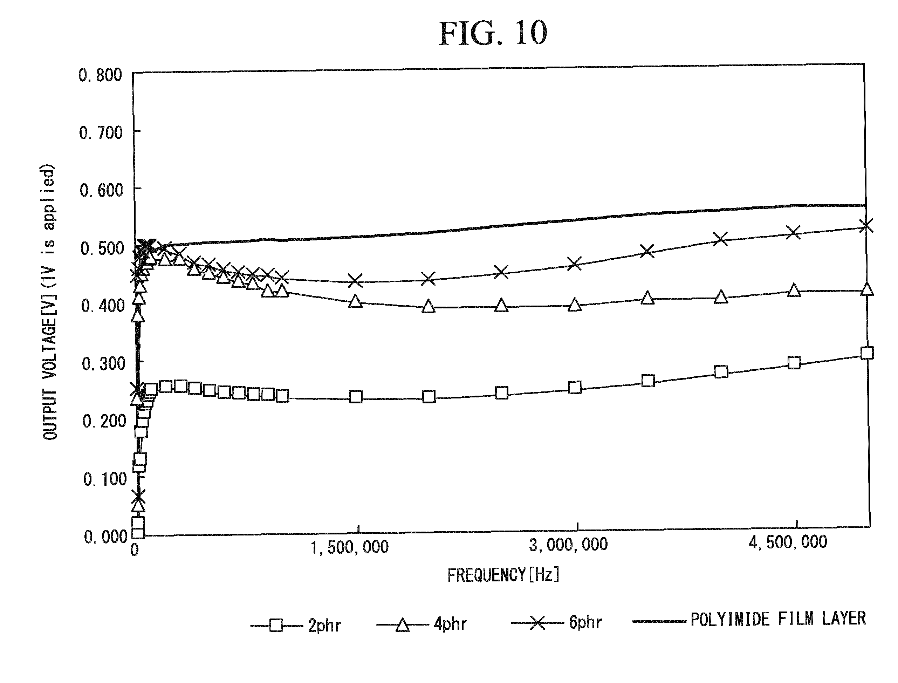

FIG. 10 illustrates a relationship between an AC frequency (application of 1 V) and an output regarding each additive amount of the conductive filler in Example 7. For comparison, a configuration in which a polyimide film layer (thickness: 0.015 mm) was interposed between the electrodes instead of the functional composite material layer is also shown.

According to FIG. 10, the greater the amount of VGCF-X added, the higher the output.

The polyimide film layer had an extremely thin thickness of 0.015 mm. On the other hand, the functional composite material layer according to the present invention had a thickness of about 0.9 mm which was 60 times the thickness of the polyimide film layer. Therefore, the composite material layer according to the present invention had a higher cushioning property than that of the polyimide film layer. Due to this high cushioning property, the adhesion with the reception side is improved. When the functional composite material layer according to the present invention is used, high output and a high cushioning property (high adhesion) can be imparted.

In addition, a relationship between kneading conditions and dielectric properties was investigated.

When the amount of VGCF-X added in Example 7 was 2 phr, kneading was performed under conditions of a kneading temperature of 60°C, a rotating speed of 50 rpm, and a kneading time of 3 minutes. In this case, at 1 MHz, as shown in Tables 7 and 8, the relative dielectric constant and the dielectric loss tangent were 7.98 and 0.26, respectively.

When the kneading temperature was also 60°C, the rotating speed was 30 rpm, and the kneading time was 5 minutes, the relative dielectric constant and the dielectric loss tangent were 6.35 and 0.16, respectively.

In addition, when the kneading temperature was 120°C, the rotating speed was 30 rpm, and the kneading time was 5 minutes, the relative dielectric constant and the dielectric loss tangent were 4.52 and 0.0789, respectively. When the kneading temperature was 120°C, the kneading time was 5 minutes, and the rotating speed was 15 rpm, the relative dielectric constant and the dielectric loss tangent were 4.66 and 0.0857, respectively. When the kneading temperature was 120°C, the kneading time was 5 minutes, and the rotating speed was 45 rpm, the relative dielectric constant and the dielectric loss tangent were 4.66 and 0.0875, respectively.

The reason why, in the case of a kneading temperature of 120°C, the dielectric loss tangent was able to be greatly decreased while a decrease in relative dielectric constant was small compared to the case of a kneading temperature of 60°C is presumed to be as follows. The viscosity of rubber was greatly changed by temperature changes, and thus the dispersed state of the conductive filler was changed. Therefore, the distance between filler aggregates in the composite material was more distant.

In this way, in a dry method (a method of, when materials are mixed, kneading and mixing the materials using a mixer, a Brabender kneader, or the like without dissolving the materials in a solution), the dielectric properties of the composite material and the functional composite material layer according to the present invention can be controlled by kneading conditions.

### (Examples 8-1 to 8-4)

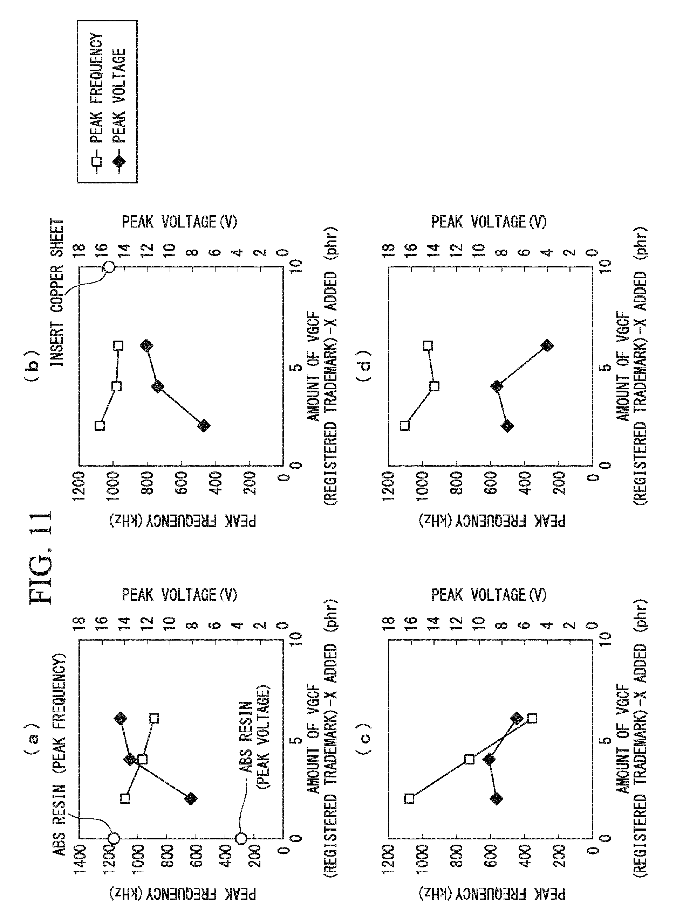

(a) to (d) of FIG. 11 (measurement results of Examples 8-1 to 8-4, respectively) illustrate results of inspecting outputs of AO and BO, which are combinations of a transmission-side configuration and a reception-side configuration of FIG. 4, by using a transmission unit including each of the composition material layers, from which the results of Tables 7 and 8 were obtained, as the functional composite material layer. Specifically, the peak voltage and the peak frequency were measured with the same method as that of Example 6, except that the transmission voltage was set to 40 V and the load resistance was set to 200 Ω in the functional composite material layer in which the amount of VGCF-X added (conductive filler) was in a range of 2 to 6.

In (a) and (c) of FIG. 11, (AO) in which the polyimide film layer (first insulating layer) was not formed on the functional composite material layer of the transmission-side configuration was used. In (b) and (d) of FIG. 11, (BO) in which the polyimide film layer (first insulating layer) was formed on the functional composite material layer of the reception-side configuration was used.

In (a) and (b) of FIG. 11, (first pattern) in which the functional composite material layers were dividedly provided on the respective two capacitors was used. In (c) and (d) of FIG. 11, (second pattern) in which the functional composite material layer as a single layer was continuously provided on the two capacitors was used.

In addition, in FIG. 11 (a), for comparison, a circle near 4 V at 0 phr represents the peak voltage of a configuration in which ABS resin, which was a represented resin used for external packaging of commonly-used home electronics or the like, was used instead of the functional composite material layer.

In addition, in FIG. 11(b), for comparison, a circle near 16 V at 10 phr represents the peak voltage of a configuration in which a copper sheet (thickness: 2 mm) was used instead of the functional composite material layer and the polyimide film layer.

The following findings were obtained from the results of (a) to (d) of FIG. 11.

When the first pattern was compared to the second pattern, the output of the first pattern (divided type) was higher.

In addition, in the first pattern, the output of the system (a) ("AO (first pattern)" (which implies the first pattern of the AO type)) in which the polyimide layer (first insulating layer) was not provided was higher. However, as the conductivity is increased by an increase in VGCF-X concentration, a difference in output was decreased.

In addition, compared to the case where the ABS resin was used as the dielectric layer, a high output was obtained in both systems of AO and BO.

The highest output was obtained in the case where the copper sheet was used. However, since the polyimide layer was provided in a system (b) of BO (first pattern), there were no concerns of electric shock and electric leakage unlike the case where the copper sheet was used as the transmission sheet. Further, the functional composite material is softer than copper, and thus the adhesion with a reception side is improved when a product is obtained therefrom. As a result, the system (b) of BO (first pattern) has a characteristic in that a high output can be stably obtained.

### (Comparative Example 6)

Next, for comparison, the peak voltage and the peak frequency were measured in a configuration in which a copper sheet (thickness: 2 mm) was used instead of the functional composite material layer in a system of BO. The peak voltage and the peak frequency were 12.07 V and 997 Hz, respectively.

### (Comparative Examples 7, Comparative Example 8, Example 9)

Next, regarding a configuration ("CO (first pattern)") in which the first insulating layer and the second insulating layer were provided on a single electrode, the peak voltage, the peak frequency, and the electrostatic capacitance of a configuration in which a PTFE layer was provided instead of the functional composite material were compared to those of a configuration in which a copper sheet was provided instead of the functional composite material.

Specifically, a coupling capacitor configuration (Comparative Example 7) of SUS electrode/PTFE 0.1 mm/PTFE 1.0 mm/PTFE 0.1 mm/copper electrode; a coupling capacitor configuration (Comparative Example 8) of SUS electrode/PTFE 0.1 mm/copper sheet 1.0 mm/PTFE 0.1 mm/copper electrode; and a coupling capacitor configuration (Example 9) of SUS electrode/PTFE 0.1 mm/functional composite material (6 phr) sheet 1.0 mm/PTFE 0.1 mm/copper electrode were used.

The peak voltage, the peak frequency, and the electrostatic capacitance of Comparative Example 7 were 1.31 V, 997 kHz, and 62 pF, respectively. The peak voltage, the peak frequency, and the electrostatic capacitance of Comparative Example 8 were 6.4 V, 1070 kHz, and 210 pF, respectively. The peak voltage, the peak frequency, and the electrostatic capacitance of Example 9 were 7.0 V, 1080 kHz, and 270 pF, respectively.

As described above, in the configuration of Example 9, a higher output than those of Comparative Examples 7 and 8 was obtained, and the capacitance was also high.

### (Examples 10-1 to 10-9)

Table 9 shows output results when a combination of a transmission-side configuration and a reception-side configuration of transmission units including the functional composite material layer according to the present invention is a first pattern or a second pattern of AB (=BA), CA(=DB), or CD (=DC) in FIG. 4.

**[Table 9]**

| | Material | Combination of Transmission and Reception | | First and Second Insulating Layers | Output (W) |
|---|---|---|---|---|---|
| Example 10-1 | EPDM4725P +VGCF-X (8phr) | AB | First Pattern | 1 PTFE Sheet | 3.3 |
| Example 10-2 | EPDM4725P +VGCF-X (8phr) | CA | First Pattern | 2 PTFE Sheets | 3.2 |
| Example 10-3 | EPDM4725P +VGCF-X (8phr) | CD | First Pattern | 3 PTFE Sheets | 3.4 |
| Example 10-4 | EPDM4725P +VGCF-X (8phr) | AB | First Pattern | 1 HI-PS Sheet | 3.4 |
| Example 10-5 | EPDM4725P +VGCF-X (8phr) | CA | First Pattern | 2 HI-PS Sheets | 3.3 |
| Example 10-6 | EPDM4725P +VGCF-X (8phr) | CD | First Pattern | 3 HI-PS Sheets | 3.2 |
| Example 10-7 | EPDM4725P +VGCF-X (8phr) | AB | Second Pattern | 1 HI-PS Sheet | 2.8 |
| Example 10-8 | EPDM4725P +VGCF-X (8phr) | CA | Second Pattern | 2 HI-PS Sheets | 2.7 |
| Example 10-9 | EPDM4725P +VGCF-X (8phr) | CD | Second Pattern | 3 HI-PS Sheets | 2.6 |
| Comparative Example 10-1 | PC480A | AB | First Pattern | 1 PTFE Sheet | 0.7 |
| Comparative Example 10-2 | PC480A | CA | Second Pattern | 2 HI-PS Sheets | 0.6 |
| Comparative Example 10-3 | Q300F | AB | First Pattern | 1 PTFE Sheet | 0.6 |
| Comparative Example 10-4 | Q300F | CA | Second Pattern | 2 HI-PS Sheets | 0.5 |

The functional composite material layer was prepared as follows. Materials including synthetic rubber (SR) (EPDM (ethylene-propylene-diene rubber); manufactured by DuPont Dow Elastomer, "NORDEL IP 4725P" (trade name)) and the conductive filler (manufactured by Showa Denko K.K., "VGCF (registered trademark)-X, additive amount: 8 phr) were kneaded using Plasticorder (manufactured by Brabender Gmbh) at 180°C. 2 phr of dicumyl peroxide as the cross-linking agent was added to the kneaded material and was kneaded with two 6-inch rolls at 100°C, followed by rolling and compression molding (150°C, 20 minutes) into a sheet shape having a thickness of 1 mm.

In this functional composite material layer, the relative dielectric constant was 150 and the dielectric loss tangent was 0.9 at an AC voltage with a frequency of 100 Hz.

The output was measured using a circuit schematically illustrated in FIG. 9.

The load resistance during the output measurement was 50 Ω. When the transmitter 12 transmitted power with 6.78 kHz and 40 V, the secondary-side voltage of the reception coil 15 was measured with the digital oscilloscope 16.

As an electrode, a copper plate with a nickel-plated surface having a thickness of 1 mm was used.

The area of the electrode and the functional composite material layer was 50 mm×50 mm. In the measurement, a transmission unit was placed on a transmission electrode table, a power receiving table having a load of 1 kg was placed thereon, and the measurement was performed under the condition of a load of 1 kg.

The first insulating layer and the second insulating layer on the functional composition material layer of a transmission-side configuration and a reception-side configuration were used as follows. In Examples 10-1 to 10-3, a sheet of PTFE (manufactured by DuPont) having a thickness of 0.05 mm was used. In addition, in Examples 10-4 to 10-9, a sheet of HI-PS (manufactured by PS Japan Corporation, "PSJ POLYSTYRENE (trade name) H0103" (MFR: 2.6 g/10 min)) having a thickness of 0.14 mm was used. In Table 9, the number of sheets described in the item "First and Second Insulating Layer" refers to the number of PTFE sheets or HI-PS sheets used as the first insulating layer or the second insulating layer.

### (Comparative Examples 10-1 to 10-4)

Instead of the functional composite material layer, a resin sheet (polypropylene "PC480A" (trade name) manufactured by SunAllomer Ltd. and an olefin-based thermoplastic elastomer "CATALLOY Q300F" (trade name)) was compression-molded (230°C, 5 minutes) into a sheet having a thickness of 1 mm. The relative dielectric constants were 2.6 and 2.7, respectively. The dielectric loss tangents were 0.01 or lower (measurement limit: 0.01), respectively. Similarly to Example 10, the output results measured in each configuration are shown in Table 9.

As illustrated in Table 9, when the functional composite material layers of Examples 10-1 to 10-9 were used, a high output was obtained in any system in which a combination of transmission units was AB, CA, or CD in FIG. 9. On the other hand, in Comparative Examples 10-1 to 10-4 using the material layer having a relative dielectric constant of lower than 30, the output was about 1/4 to 1/7 of that of Examples 10-1 to 10-9.

### (Examples 11-1 to 11-6)

Table 10 shows exemplary functional composite materials in which the relative dielectric constant was 30 or higher and the dielectric loss tangent was 3 or lower at an AC voltage with a frequency of 100 Hz, and Table 10 also shows preparation conditions of the exemplary functional composite materials and the output results when a combination of transmission units including functional composite material layers formed of these materials was the first pattern or the second pattern of AO or CO in FIG. 4. The output was measured with the same method as that of Example 10. In the case of a combination of CO, as the first insulating layer and the second insulating layer, the sheet of HI-PS (thickness: 0.14 mm) used in Example 10 was used.

**[Table 10]**

| No. | Polymer Material | Conductive Filler phr | Kneading Temperature °C | Relative Dielectric Constant | Dielectric Loss Tangent | Output (W) | | | |
|---|---|---|---|---|---|---|---|---|---|
| | | | | | | AO (First Pattern) | AO (Second Pattern) | CO (First Pattern) | CO (Second Pattern) |
| Example 11-1 | NR/NBR | 4 | 120 | 770 | 1.1 | 3.0 | 2.6 | 2.8 | 2.4 |
| Example 11-2 | NR/NBR/F6 | 4 | 120 | 1200 | 1.9 | 2.9 | 2.3 | 2.8 | 2.3 |
| Example 11-3 | EPDM4725P | 8 | 180 | 150 | 0.9 | 3.3 | 2.7 | 3.1 | 2.5 |
| Example 11-4 | Q300F | 4 | 220 | 31 | 0.1 | 3.4 | 3.3 | 2.8 | 2.9 |
| Example 11-5 | TAFMER DF840 | 4 | 180 | 150 | 1.6 | 3.3 | 2.2 | 3.2 | 2.5 |
| Example 11-6 | SIBSTAR 062T | 10 | 180 | 32 | 0.3 | 3.4 | 3.2 | 3.2 | 3.0 |
| Comparative Example 11-1 | PTFE | - | - | 2.1 | <0.01 | 0.4 | 0.4 | 0.3 | 0.3 |
| Comparative Example 11-2 | EPDM4725P | 2 | 180 | 4.1 | 0.05 | 1.5 | 1.5 | 1.2 | 1.1 |
| Comparative Example 11-3 | Q300F | 2 | 220 | 2.5 | 0.04 | 0.9 | 0.8 | 0.6 | 0.6 |

The functional composite material layer was prepared using the same preparation method as that of Example 10 by compression-molding functional composite materials including a polymer material and VGCF-X as the conductive filler into a 2 mm-thick sheet shape.

As the polymer material, NR/NBR was used in Examples 11-1 and 11-2, EPDM ("NORDEL IP 4725P" (trade name)) was used in Example 11-3, an olefin-based thermoplastic elastomer ("CATALLOY Q300F" (trade name)) was used in Example 11-4, a thermally modified polyethylene ("TAFMER DF840" (manufactured by Mitsui Chemical Inc.)) was used in Example 11-5, and a thermoplastic elastomer ("SIBSTAR 062T" (manufactured by Kaneka Corporation)) was used in Example 11-6. In Example 11-2, the functional composite material layer was formed of materials including TiO₂ ("SUPER-TITANIA (registered trademark) F-6" (trade name), manufactured by Showa Titanium K.K.) as the inorganic conductive filler.

### (Comparative Examples 11-1 to 11-3)

Using a material having a relative dielectric constant of lower than 30 instead of the functional composite material layer according to the present invention, the output was measured with the same method as that of Examples 11-1 to 11-6. In Comparative Example 11-1, a PTFE (manufactured by DuPont) sheet as a resin was used. In Comparative Example 11-2, only the amount of the conductive filler was different from that of Example 11-3. In Comparative Example 11-3, only the amount of the conductive filler was different from that of Example 11-4. The thickness was 2 mm in all the examples.

As shown in Table 10, when each of the functional composite materials having a relative dielectric constant of 30 or higher and a dielectric loss tangent of 3 or lower were used, a high output was obtained. On the other hand, in Comparative Examples 11-1 to 11-3, the relative dielectric constant was lower than 30, and the obtained outputs were about 1/2 to 1/10 of those of Examples 11-1 to 11-6.

### (Examples 12-1 to 12-6)

Table 11 shows the results of evaluating, based on an LED turned-on state, a transmission system in which a combination of transmission units including functional composite material layers used in Examples 11-1 to 11-6 was CO (first pattern) of FIG. 4.

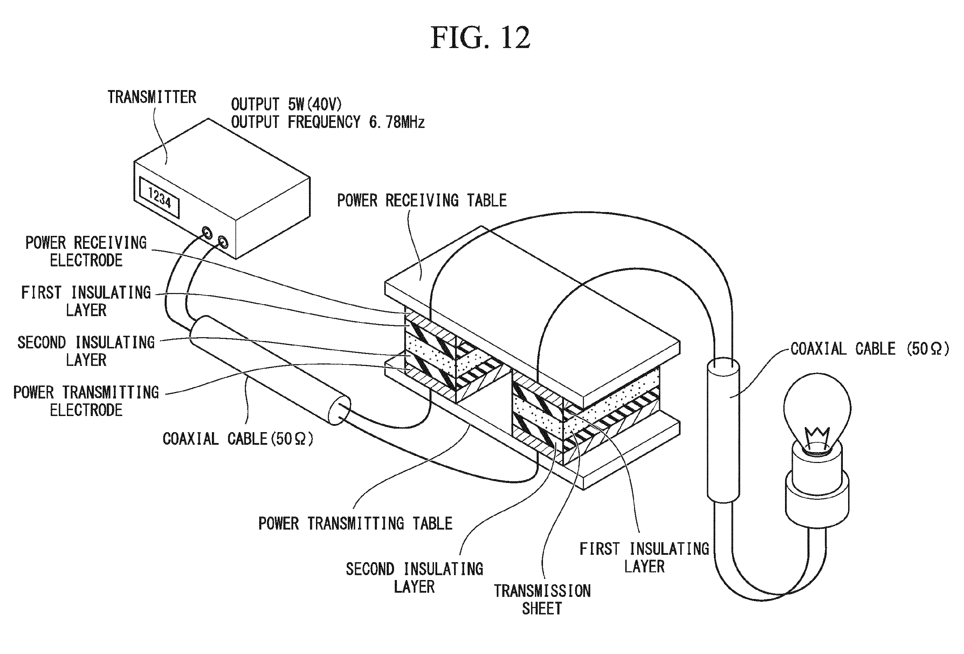

More specifically, the transmission system in which the combination of the transmission units was CO (first pattern) in FIG. 4 was evaluated based on a LED turned-on state by using a circuit schematically illustrated in FIG. 12 and arranging ten 3.5 V LEDs (corresponding to 1 W in total).

As an electrode, a copper plate with a nickel-plated surface having a thickness of 1 mm and a size of 60 mmx60 mm was used.

In addition, the area of the functional composite material layer was 50 mm×50 mm, and the evaluation was performed under the same condition as that of Example 10 of a load of 1 kg. In the case of a combination of CO, as the first insulating layer and the second insulating layer, the sheet of HI-PS (thickness: 0.14 mm) used in Example 10 was used.

In the evaluation test, the transmitter transmitted power with 6.78 MHz and 5 W (40 V) to light up LEDs through the transmission system.

**[Table 11]**

| No. | Polymer Material | Conductive Filler phr | Relative Dielectric Constant | Dielectric Loss Tangent | LED Lighting Evaluation |
|---|---|---|---|---|---|
| Example 12-1 | NR/NBR | 4 | 770 | 1.1 | A |
| Example 12-2 | NR/NBR/F6 | 4 | 1200 | 1.9 | A |
| Example 12-3 | EPDM4725P | 8 | 150 | 0.9 | A |
| Example 12-4 | Q300F | 4 | 31 | 0.1 | A |
| Example 12-5 | TAFMER DF840 | 4 | 150 | 1.6 | A |
| Example 12-6 | SIBSTAR 062T | 10 | 32 | 0.3 | A |
| Comparative Example 12-1 | PTFE | - | 2.1 | <0.01 | D |
| Comparative Example 12-2 | EPDM4725P | 2 | 4.1 | 0.05 | D |
| Comparative Example 12-3 | Q300F | 2 | 2.5 | 0.04 | D |

The LED lighting evaluation results shown in Table 11 were determined based on the following criteria.
A: 10 LEDs were brightly turned on
B: 10 LEDs were turned on but darker than A
C: LEDs were unstably turned on
D: LEDs were not turned on

### (Comparative Examples 12-1 to 12-3)

In Table 11, Comparative Examples 12-1 to 12-3 show the LED lighting evaluation results of Comparative Examples 11-1 to 11-3 based on the same criteria as those of Examples 12-1 to 12-6.

As illustrated in Table 11, in Examples 12-1 to 12-6 in which each of the functional composite materials having a relative dielectric constant of 30 or higher and a dielectric loss tangent of 3 or lower was used, high power was able to be stably received to the extent that 10 LEDs were brightly turned on. On the other hand, in Comparative Examples 11-1 to 11-3 in which the relative dielectric constant was lower than 30, although the same power as that of Examples 12-1 to 12-6 was transmitted thereto, only small power was received to the extent that 10 LEDs were not able to be turned on.

### <Appendix>

Based on the above-described embodiments of the present invention, technical ideas having the following configurations are also conceivable, but the present invention is not limited thereto.

(Appendix 1) A composite material comprising a polymer material; and conductive filler, in which the conductive filler forms aggregates having an average diameter of 1 µm or greater, and an average distance between the aggregates is 10 nm to 30 µm.

(Appendix 2) The composite material according to (Appendix 1), in which the polymer material is cross-linked.

(Appendix 3) The composite material according to (Appendix 1) or (Appendix 2), comprising two or more types of polymer materials which are mutually insoluble as the polymer material.

(Appendix 4) The composite material according to any one of (Appendix 1) to (Appendix 3), comprising inorganic dielectric filler.

(Appendix 5) A composite material comprising at least two conductive layers each of which includes a polymer material and conductive filler and has a thickness of 1 µm or greater; and an insulating layer that includes a polymer material which is the same as or different from that of the conductive layers, is inserted between the conductive layers, and has a thickness of 10 nm to 30 µm.

(Appendix 6) The composite material according to any one of (Appendix 1) to (Appendix 5), in which the polymer material is one or more selected from the group consisting of polyimide, silicone resin, a fluoropolymer, polyurethane, acrylic resin, polycarbonate, polypropylene, polyethylene, polyester, epoxy resin, cyanate ester resin, natural rubber, and synthetic rubber (SR).

(Appendix 7) The composite material according to any one of (Appendix 1) to (Appendix 5), in which the polymer material is natural rubber.

(Appendix 8) The composite material according to any one of (Appendix 1) to (Appendix 5), in which the polymer material is synthetic rubber (SR).

(Appendix 9) A composite material which is obtained by dispersing conductive filler in a polymer material, in which an amount of the conductive filler added is 1 part by mass to 25 parts by mass with respect to 100 parts by mass of the polymer material, and a relative dielectric constant is 30 or higher and a dielectric loss tangent is 3 or lower at an AC voltage with a frequency of 100 Hz.

(Appendix 10) The composite material according to (Appendix 9), in which the conductive filler is composed of a carbon material.

(Appendix 11) The composite material according to (Appendix 9) or (Appendix 10), in which the polymer material is cross-linked.

(Appendix 12) The composite material according to any one of (Appendix 9) to (Appendix 11), comprising two or more types of polymer materials which are mutually insoluble as the polymer material.

(Appendix 13) The composite material according to any one of (Appendix 9) to (Appendix 12), comprising inorganic dielectric filler.

(Appendix 14) A transmission sheet constituting a transmission unit used for a non-contact power transmission system which can transmit power by arranging a transmission electrode and a reception electrode to be close to each other, the transmission sheet consists of the composite material according to any one of (Appendix 1) to (Appendix 8).

(Appendix 15) A transmission sheet constituting a transmission unit used for a non-contact power transmission system which can transmit power by arranging a transmission electrode and a reception electrode to be close to each other, the transmission sheet comprises a composite material which is obtained by dispersing conductive filler in a polymer material, in which an amount of the conductive filler added is 1 part by mass to 25 parts by mass with respect to 100 parts by mass of the polymer material, and a relative dielectric constant of the composite material is 30 or higher and a dielectric loss tangent of the composite material is 3 or lower at an AC voltage with a frequency of 100 Hz.

(Appendix 16) The transmission sheet used for a non-contact power transmission system according to (Appendix 15), in which the conductive filler is composed of a carbon material.

(Appendix 17) The transmission sheet used for a non-contact power transmission system according to (Appendix 15) or (Appendix 16), in which the polymer material is cross-linked.

(Appendix 18) The transmission sheet used for a non-contact power transmission system according to any one of (Appendix 15) to (Appendix 17), comprising two or more types of polymer materials which are mutually insoluble as the polymer material.

(Appendix 19) The transmission sheet used for a non-contact power transmission system according to any one of (Appendix 15) to (Appendix 18), comprising inorganic dielectric filler.

(Appendix 20) A transmission sheet constituting a transmission unit used for a non-contact power transmission system which can transmit power by arranging a transmission electrode and a reception electrode to be close to each other, in which the transmission sheet comprises a functional composite material layer and a first insulating layer, in which the functional composite material layer is composed of a composite material which is obtained by dispersing conductive filler added in a polymer material, an amount of the conductive filler added is 1 part by mass to 25 parts by mass with respect to 100 parts by mass of the polymer material, and a relative dielectric constant of the functional composite material layer is 30 or higher and a dielectric loss tangent of the functional composite material layer is 3 or lower at an AC voltage with a frequency of 100 Hz.

(Appendix 21) The transmission sheet used for a non-contact power transmission system according to (Appendix 20), in which the conductive filler is composed of a carbon material.

(Appendix 22) The transmission sheet used for a non-contact power transmission system according to (Appendix 20) or (Appendix 21), in which the polymer material is cross-linked.

(Appendix 23) The transmission sheet used for a non-contact power transmission system according to any one of (Appendix 20) to (Appendix 22), comprising two or more types of polymer materials which are mutually insoluble as the polymer material.

(Appendix 24) The transmission sheet used for a non-contact power transmission system according to any one of (Appendix 20) to (Appendix 23), comprising inorganic dielectric filler.

(Appendix 25) A transmission sheet constituting a transmission unit used for a non-contact power transmission system which can transmit power by arranging a transmission electrode and a reception electrode to be close to each other, in which the transmission sheet comprises a functional composite material layer and a first insulating layer in order, in which the functional composite material layer is composed of the composite material according to any one of (Appendix 1) to (Appendix 8).

(Appendix 26) The transmission sheet used for a non-contact power transmission system according to any one of (Appendix 20) to (Appendix 25), in which the first insulating layer is composed of any one of natural rubber, EPDM, ABS resin, and PTFE.

(Appendix 27) A transmission unit used for a non-contact power transmission system which can transmit power by arranging a transmission electrode and a reception electrode to be close to each other, in which the transmission unit comprises an electrode; and a functional composite material layer, in which the functional composite material layer is composed of a composite material which is obtained by dispersing conductive filler in a polymer material, an amount of the conductive filler added is 1 part by mass to 25 parts by mass with respect to 100 parts by mass of the polymer material, and a relative dielectric constant of the functional composite material is 30 or higher and a dielectric loss tangent of the functional composite material is 3 or lower at an AC voltage with a frequency of 100 Hz.

(Appendix 28) A transmission unit used for a non-contact power transmission system which can transmit power by arranging a transmission electrode and a reception electrode to be close to each other, in which the transmission unit comprised an electrode and a functional composite material layer in order, in which the functional composite material layer is composed of the composite material according to any one of (Appendix 1) to (Appendix 8).

(Appendix 29) The transmission unit used for a non-contact power transmission system according to (Appendix 27) or (Appendix 28), in which a first insulating layer is composed on the functional composite material layer.

(Appendix 30) The transmission unit used for a non-contact power transmission system according to (Appendix 29), in which the first insulating layer is composed of any one of natural rubber, EPDM, ABS resin, and PTFE.

(Appendix 31) The transmission unit used for a non-contact power transmission system according to any one of (Appendix 27) to (Appendix 30), in which a second insulating layer is formed between the electrode and the functional composite material layer.

(Appendix 32) The transmission unit used for a non-contact power transmission system according to (Appendix 31), in which the second insulating layer is composed of any one of natural rubber, EPDM, ABS resin, PTFE, and a cyano acrylate-based adhesive such as ethyl cyanoacrylate.

(Appendix 33) The transmission unit used for a non-contact power transmission system according to any one of (Appendix 27) to (Appendix 32), in which the electrode is composed of a conductor including an elastomer and a carbon fiber.

(Appendix 34) A transmission unit used for a non-contact power transmission system which can transmit power by arranging a transmission electrode and a reception electrode to be close to each other, in which the transmission unit comprises an electrode; a functional composite material layer in order; and a first insulating layer, in which the functional composite material layer is composed of the composite material according to any one of (Appendix 1) to (Appendix 8).

(Appendix 35) The transmission unit used for a non-contact power transmission system according to (Appendix 34), in which the first insulating layer is composed of any one of natural rubber, EPDM, ABS resin, and PTFE.

(Appendix 36) The transmission unit used for a non-contact power transmission system according to (Appendix 34) or (Appendix 35), in which a second insulating layer is formed between the electrode and the functional composite material layer.

(Appendix 37) The transmission unit used for a non-contact power transmission system according to Claim (Appendix 36), in which the second insulating layer is composed of any one of natural rubber, EPDM, ABS resin, PTFE, and a cyano acrylate-based adhesive such as ethyl cyanoacrylate.

(Appendix 38) The transmission unit used for a non-contact power transmission system according to any one of (Appendix 34) to (Appendix 37), in which the electrode is composed of a conductor including an elastomer and a carbon fiber.

(Appendix 39) A non-contact power transmission system comprising the transmission sheet used for a non-contact power transmission system according to any one of (Appendix 14) to (Appendix 26).

(Appendix 40) A non-contact power transmission system comprising the transmission unit used for a non-contact power transmission system according to any one of (Appendix 27) to (Appendix 38).

### DESCRIPTION OF NUMERALS

1: ELECTRODE
2: FUNCTIONAL COMPOSITE MATERIAL LAYER
3: FIRST INSULATING LAYER
11: GROUND
12: TRANSMITTER
13: TRANSMISSION-SIDE COIL
14: ELECTRODE
14a: TRANSMISSION-SIDE ELECTRODE
14b: RECEPTION-SIDE ELECTRODE
15: RECEPTION-SIDE COIL
16: DIGITAL OSCILLOSCOPE
17: DIELECTRIC
21: ELECTRODE
100: TRANSMISSION UNIT
200: TRANSMISSION UNIT
300: TRANSMISSION UNIT

## Claims

1. A composite material which is obtained by dispersing conductive filler in a polymer material:
wherein an amount of the conductive filler added is 1 part by mass to 25 parts by mass with respect to 100 parts by mass of the polymer material; and
wherein a relative dielectric constant of the composite material is 30 or higher and a dielectric loss tangent of the composite material is 3 or lower at an AC voltage with a frequency of 100 Hz.

2. A composite material comprising:
a polymer material and conductive filler;
wherein the conductive filler form aggregates having an average diameter of 1 µm or greater, and an average distance between the aggregates is 10 nm to 30 µm.

3. A composite material comprising:
at least two conductive layers each of which includes a polymer material and conductive filler and has a thickness of 1 µm or greater; and
an insulating layer that includes a polymer material which is the same as or different from that of the conductive layer, is inserted between the conductive layers and has a thickness of 10 nm to 30 µm.

4. The composite material according to any one of claims 1 to 3,
wherein the conductive filler is composed of a carbon material.

5. The composite material according to any one of claims 1 to 4,
wherein the polymer material is cross-linked.

6. The composite material according to any one of claims 1 to 5, comprising two or more types of polymer materials which are mutually incompatible as the polymer material.

7. The composite material according to any one of claims 1 to 6, comprising inorganic dielectric filler.

8. The composite material according to any one of claims 1 to 7,
wherein the polymer material is one or more selected from the group consisting of polyimide, silicone resin, a fluoropolymer, polyurethane, acrylic resin, polycarbonate, polypropylene, polyethylene, polyester, epoxy resin, cyanate ester resin, natural rubber, and synthetic rubber.

9. The composite material according to any one of claims 1 to 7,
wherein the polymer material is natural rubber.

10. The composite material according to any one of claims 1 to 7,
wherein the polymer material is synthetic rubber.

11. A transmission sheet constituting a transmission unit used for a non-contact power transmission system which can transmit power by arranging a transmission electrode and a reception electrode to be close to each other, wherein the transmission sheet consists of the composite material according to any one of claims 1 to 10.

12. A transmission sheet constituting a transmission unit used for a non-contact power transmission system which can transmit power by arranging a transmission electrode and a reception electrode to be close to each other:
wherein the transmission sheet comprises a functional composite material layer and a first insulating layer in this order;
wherein the functional composite material layer consists of the composite material according to any one of claims 1 to 10.

13. The transmission sheet used for a non-contact power transmission system according to claim 12, wherein a volume resistivity of the first insulating layer is 1×10¹⁰ (Ω·cm) or higher.

14. The transmission sheet used for a non-contact power transmission system according to claim 12 or 13, wherein the first insulating layer is composed of any one of natural rubber, EPDM, ABS resin, and PTFE.

15. A transmission unit used for a non-contact power transmission system which can transmit power by arranging a transmission electrode and a reception electrode to be close to each other:
wherein the transmission unit comprising an electrode and a functional composite material layer in this order; and
wherein the functional composite material layer consists of the composite material according to any one of claims 1 to 10.

16. The transmission unit used for a non-contact power transmission system according to claim 15, wherein a first insulating layer is formed on the functional composite material layer.

17. The transmission unit used for a non-contact power transmission system according to claim 16, wherein a volume resistivity of the first insulating layer is 1×10¹⁰ (Ω·cm) or higher.

18. The transmission unit used for a non-contact power transmission system according to claim 16 or 17, wherein the first insulating layer is composed of any one of natural rubber, EPDM, ABS resin, and PTFE.

19. The transmission unit used for a non-contact power transmission system according to any one of claims 15 to 18, wherein a second insulating layer is formed between the electrode and the functional composite material layer.

20. The transmission unit used for a non-contact power transmission system according to claim 19, wherein a volume resistivity of the second insulating layer is 1×10¹⁰ (Ω·cm) or higher.

21. The transmission unit used for a non-contact power transmission system according to claim 19 or 20, wherein the second insulating layer is composed of any one of natural rubber, EPDM, ABS resin, PTFE, and a cyano acrylate-based adhesive such as ethyl cyanoacrylate.

22. The transmission unit used for a non-contact power transmission system according to any one of claims 15 to 21, wherein the electrode is composed of a conductor including an elastomer and a carbon fiber.

23. A transmission unit used for a non-contact power transmission system which can transmit power by arranging a transmission electrode and a reception electrode to be close to each other:
wherein the transmission unit comprises an electrode, a functional composite material layer, and a first insulating layer in this order; and
wherein the functional composite material layer consists of the composite material according to any one of claims 1 to 10.

24. The transmission unit used for a non-contact power transmission system according to claim 23, wherein a volume resistivity of the first insulating layer is 1×10¹⁰ (Ω·cm) or higher.

25. The transmission unit used for a non-contact power transmission system according to claim 23 or 24, wherein the first insulating layer is composed of any one of natural rubber, EPDM, ABS resin, and PTFE.

26. The transmission unit used for a non-contact power transmission system according to any one of claims 23 to 25, wherein a second insulating layer is formed between the electrode and the functional composite material layer.

27. The transmission unit used for a non-contact power transmission system according to claim 26, wherein a volume resistivity of the second insulating layer is 1×10¹⁰ (Ω·cm) or higher.

28. The transmission unit used for a non-contact power transmission system according to claim 26 or 27, wherein the second insulating layer is composed of any one of natural rubber, EPDM, ABS resin, PTFE, and a cyano acrylate-based adhesive such as ethyl cyanoacrylate.

29. The transmission unit used for a non-contact power transmission system according to any one of claims 23 to 28, wherein the electrode is composed of a conductor including an elastomer and a carbon fiber.

30. A non-contact power transmission system comprising the transmission sheet used for a non-contact power transmission system according to any one of claims 11 to 14.

31. A non-contact power transmission system comprising the transmission unit used for a non-contact power transmission system according to any one of claims 15 to 29.
